# EUROPEAN PATENT APPLICATION

(11) **EP 3 954 214 A1**
(43) Date of publication of application: **16.02.2022**
(21) Application number: 19924576.2
(22) Date of filing: 25.06.2019
(51) Int. Cl.: A01N 63/00

(54) **MULTIPURPOSE BIOLOGICAL COMPOSITIONS**

(30) Priority: 10.04.2019 BR 102019007273
(71) Applicant: Agrivalle Brasil Industria e Comércio de Produtos Agrícolas Ltda, 13320-000 Salto / SP (BR)
(72) Inventor: BERNARDO, Eduardo Roberto De Almeida, 13331-284 INDAIATUBA / SP (BR); MARTINS, Thales Facanali, 13333-515 INDAIATUBA / SP (BR)
(74) Representative: Pereira Garcia, João Luís
(86) International application number: PCT/BR2019/050236
(87) International publication number: WO 2020/206518

(57) **Abstract**

The present patent invention relates to multipurpose biological compositions pertaining to the technical sector of biotechnology for the biological control of phytopathogens, phytonematodes, agricultural pests, inoculating agent, phosphorus solubilization, soil conditioning, biostimulant, reduction of hydric stress in cultivated plants and bioremediation in cultivatable or other areas, and more specifically relates to compositions containing mixtures of additives and excipients with at least two (2) species from *Bacillus* or two (2) or more strains of a given species and mutants thereof; at least two (2) representatives of fungi from the orders Hypocreales, Orbiliales, Helotiales and Mucorales or two (2) or more strains of a given species from representatives of the orders and mutants thereof; Bacillus in mixtures with fungi from the orders Hypocreales, Orbiliales, Helotiales and Mucorales, and combinations between some or all of said fungi (in colony-forming units, CFU) with or without pesticides (fungicides, insecticides, acaricides, herbicides and nematicides), essential oils from plants or plant extract with nematicidal effects to control and reduce damage caused by phytonematodes, with fungicidal effects to control and reduce damage caused by phytopathogens, with insecticidal action to control and reduce damage caused by insects and mites, with growth-promoting action, soil conditioner, biostimulants, to mitigate hydric stress in cultivated plants and bioremediation in cultivatable or other areas, this composition enhances the efficiency in the training of the cultivated plants by using mechanisms with different and complementary actions of the compositions of microorganisms and noteworthy chemical or biological active ingredients.

## Description

The present patent invention relates to multipurpose biological compositions pertaining to the technical sector of biotechnology for the biological control of phytopathogens, phytonematodes, agricultural pests, inoculating agent, phosphorus solubilization, soil conditioning, biostimulant, reduction of hydric stress in cultivated plants and bioremediation in cultivatable or other areas, and more specifically relates to compositions containing mixtures of additives and excipients with at least 2 (two) species from *Bacillus* or 2 (two) or more strains of a given species and mutants thereof; at least 2 (two) representatives of fungi from the orders Hypocreales, Orbiliales, Helotiales and Mucorales or 2 (two) or more strains of a given species from representatives of the orders and mutants thereof; Bacillus in mixtures with fungi from the orders Hypocreales, Orbiliales, Helotiales and Mucorales, and combinations between some or all of said fungi (in colony-forming units, CFU) with or without pesticides (fungicides, insecticides, acaricides, herbicides and nematicides), essential oils from plants or plant extracts with nematicidal effects to control and reduce damage caused by phytonematodes, with fungicidal effects to control and reduce damage caused by phytopathogens, with insecticidal action to control and reduce damage caused by insects and mites, with growth-promoting action, soil conditioner, biostimulants, to mitigate hydric stress in cultivated plants and bioremediation in cultivatable or other areas, for spraying, boom spraying, aerial spraying, low volume, ultra-low volume, planting furrow spraying, drench, coating (either industrially or not), treatment (either industrially or not) and incrustation (either industrially or not) of crop seeds. Pertaining to the biotechnology technical field, this composition enhances the efficiency in the training of the cultivated plants by using mechanisms with different and complementary actions of the compositions of the above-mentioned microorganisms and active ingredients.

### STATE OF THE ART

Frequently, agriculture productive gains have been associated to gradual increases in the productivity without a concomitant increase in the cultivatable area. Said productivity increases have been attained through significant advances in cultivation techniques, use of varieties more adapted to biotic and abiotic factors, suitability of the plant nutritional need, and also better control and reduction of damages caused by phytopathogenic agents and agricultural pests. Among said advancements, the control of pests and diseases is still seen as the utmost challenge in keeping the crop productivity. Several techniques can be used with a higher or lower degree of efficacy, but generally the use of agrochemicals is the most used method.

However, in the control of phytopathogens, phytonematodes and agricultural pests, the use of agrochemicals has often shown unsatisfactory results. Most of this problem derives from the indiscriminate and excessive use of chemical molecules which have often caused human and/or animal intoxication problems, concomitantly with the environment contamination. Said events have led to a higher public awareness contrary to the use of agrochemicals and the endless search for safer or alternate soil management techniques.

Thus, alternative control to fight phytonematodes, phytopathogens and agricultural pests has been used whenever possible, but adversities inherent to the biology of said organisms generally make the use of some techniques unfeasible. For example, varieties of resistant cultivars are hardly available, whereas the rotation of crops is usually unfeasible in view of the high costs and broad range of hosts for some species (Bird et al., 2003)

In this context, the biological control using microorganisms has been deemed as a viable option, either for treating seeds, or treating planting furrows, or spraying crops of interest.

Among the mechanisms of action, both antagonism and antibiosis are usually the predominant modes of action of bacteria against phytonematodes and fungi. In the case of fungi, competitiveness and parasitism are most frequent. Besides the direct effect on the mortality of phytonematodes, said nematicidal compounds can act directly on the emergence of eggs or mobility, as well as indirect effects such as alteration of radicular exsudates, confusion in the locomotion or induction of resistance also being observed (Sikora & Hoffmann-Hergarten, 1992; Hasky-Günther et al. 1998). The use of bacteria as biological control agents has been shown to be a promising alternative in the productive system (Hallmann et al. 2004) such as, for example, for *Meloidogyne graminicola,* where *Bacillus megaterium* reduced by 40% both the penetration and formation of branches of said phytonematode in rice roots, besides reducing by 60% its migration to the rhizosphere and also reducing by 60% the emergence of eggs (Sikora & Padgham 2007).

According to Da Silva et al. (2007), the use of *Bacillus subtilis* for controlling *Pratylenchus brachyurus* was as good as the chemical treatment using abamectin, exhibiting extremely low populations of said phytonematodes in the soil, approx. 1 phytonematode/cm³ of soil, reducing approx. 90% said population compared to the control treatment. Other results in this line of research, also using *Bacillus subtilis* for treating seeds, is evidenced by Da Silva et al. (2007), showing that this alternate management has provided reductions in the order of 50.06% in the population of *Pratylenchus spp.* 30 days after the seeding, aggregating 18% in productivity. Similar results have been attained by Higaki (2012) using *Bacillus subtilis* to control *Rotylenchulus reniformis* and *Pratylenchus brachyurus* in cotton plants. The treatment using the microorganism has exhibited reductions higher than 50% in the populations of said phytonematodes in crop roots. Bernardo (2002), using fungi *Monacrosporium robustum, Arthrobotrys oligospora* and *A. musiformis,* has attained significant reductions in the populations of *R. reniformis* both in vitro and in the field.

Other interesting data reported by Higaki (2012) was that the plants treated with said microorganisms have shown increments in the fresh mass of roots and aerial part in the order of 36 and 47%, respectively, compared to the control treatment. According to Araújo et al. (2008), the mechanisms of action responsible for promoting plant growth can be initially linked to the direct inhibition of the pathogen and the induction of systemic resistance, among others. It is often hard to recognize the mechanisms and associated same with the direct growth promotion, since more than one mechanism is produced by the bacteria.

For the biological control of phytopathogens in cultivated plants, Cook & Baker (1983) have reported that the characterization of effectiveness of this management practice is "the reduction of the sum of inoculum or the activities that determine the disease caused by a pathogen effected by or through one or more organisms other than man." Having this concept of action in mind, Bettiol et al. (2008) have reported that the use of *Bacillus subtilis* has been successful in the control of oidium, (caused by fungus *Uncinula necato*) and gray rot (caused by fungus *Botrytis cinerea*) in grapes and other crops for many years in Chile. Bernardo (2007) has observed a high control efficacy in *Guignardia citricarpa* and *Penicillium digitatum* under field and post-harvest conditions. According to Mattos (2010), the use of a combination of *B. subitilis* and *B. licheniformis,* has provided significant reductions in the incidence of green mold caused by fungus *Penicillium digitatum* in fruit after "pear" orange is harvested.

Genus *Bacillus spp.* is widely known as an excellent producer of antimicrobial compounds (Huang & Chang, 1975; Baker et al., 1983; Motomura & Hirooka, 1996) and the evidence of the production of phytopathogen inhibiting substances produced by several *Bacillus spp.* isolates is especially important to understand the mechanisms of action of said microorganisms for antagonism. In general, antagonist bacteria such as *B. subtilis* act significantly through antibiosis, and occasionally through parasitism and competitiveness. Thus, the control of diseases can be effective due to the substances produced thereby, but not only the mass introduction of biocontrol agents (Arras & Arru, 1997). Microorganisms that act through antibiosis have usually a wide spectrum of action, in such a way that the production of toxic substances is more effective in the inhibition of fungi than any other mechanism of action involved.

With regard to the abiotic stress, a viable alternative with significant results is the use of plant growth promoting rhizobacteria (RPCP). Several mechanisms associated to RPCP's that help plants to stand the effects of the hydric stress have been described, among which: solubilization and fixation of nutrients, production of siderophores, production of plant hormones, production of volatile compounds, alteration in the morphology and architecture of roots, activity of ACC deaminase, accumulation of osmolytes, action on the antioxidant system of the plant, and production of exo-polysacharides (EPS) (ALAMI et al., 2000; ARORA et al., 2001; HUSSAIN et al., 2009; VURUKONDA et al., 2016).

Among the described mechanisms, the production of EPS's by bacteria has been widely studied but aiming at the industrial use especially in food and pharmaceuticals industries due to their emulsifying and thickening characteristics (KUMAR et al., 2007). However, given said characteristics, the use of EPS producing bacteria in agriculture has risen some interest, since they can act as an important tool in the mitigation of abiotic stress.

Despite said advantages, most of the existing products are based on the premise of exploring a single microorganism for the biologic control of phytopathogens and phytonematodes, inoculants, soil conditioners, bioestimulants, hydric stress reducers in cultivated plants, and bioremediation. As reported, some agents have more than one mechanism of action, which can act separately or simultaneously, directly or indirectly on phytonematodes and phytopathogens, in plant growth stimulation, in soil conditioning, in hydric stress reduction in cultivated plants, and bioremediation. However, associations among several agents are still quite unexplored, and they expand the action specter of said microorganisms, benefiting the plant growth and protection, consequently an increase in the productivity and environment protection.

As a part of the state-of-the-art, we also distinguish the following documents: patent W02018/045063, US patent 7,429,477 B2, US patent 6,808,917 B1, US patent 2011/0110906 A1, US patent 6,194,193 B1, BR1020180105434.

### OBJECTS OF THE INVENTION

Therefore, the object of the present invention is to provide compositions that effectively reduce damages caused by phytopathogens, phytonematodes, agricultural pests, promote the plant growth, condition soils and mitigates damages caused by eventual hydric stresses or environment contamination.

### BRIEF DESCRIPTION OF THE INVENTION

The present invention refers to multipurpose biological compositions for spraying, boom spraying, aerial spraying, low volume, ultra-low volume, plant furrow spraying, drench, coating (either industrially or not), treatment (either industrially or not) and incrustation (either industrially or not) of crop seeds, containing combinations of at least 2 (two) species from *Bacillus* or 2 (two) or more strains of a same species and mutants thereof; of at least 2 (two) representatives of fungi belonging to orders Hypocreales, Orbiliales, Helotiales and Mucorales and mutants thereof, or 2 (two) or more strains of a same species from representatives of said orders; *Bacillus* mixed with fungi from orders Hypocreales, Orbiliales, Helotiales and Mucorales, and combinations among same or a part of same (in colony forming units, CFU) together with or separated from agrochemicals (fungicides, insecticides, acaricides, herbicides and nematicides), essential oils of plants or plant extracts in biological compositions having fungicidal, nematicidal, insecticidal, growth stimulating, soil conditioning properties and exhibiting reduced hydric stress effects on cultivatable plants, and bioremediation in cultivated areas.

### DETAILED DESCRIPTION OF THE INVENTION

The multipurpose biological compositions comprise: 1.0 to 90.0% of at least 2 (two) species from *Bacillus,* or 2 (two) or more strains of a same species and mutants thereof;
1.0 to 90.0% of at least 2 (two) representatives of fungi of orders Hypocreales, Orbiliales, Helotiales and Mucorales and mutants thereof, or 2 (two) or more strains of a same species from representatives of said orders; *Bacillus* mixed with fungi from orders Hypocreales, Orbiliales, Helotiales and Mucorales, and combinations among same or part of same (in colony forming units, CFU);
5.0 to 10.0% of agrochemicals;
5.0 to 20.0% of essential oils;
5.0 to 20.0% of plant extracts;
1.0 to 15.0% of additives; and
1.0 to 97.0% of excipients.

The *Bacillus* that comprise order Bacilales and mutants thereof belong to the group consisting of *Bacillus velezensis, Bacillus aryabhattai, Bacillus genus, Bacillus pseudomycoides, Bacillus mucilaginosus, Bacillus sonorensis, Bacillus agri, Bacillus aizawai, Bacillus albolactis, Bacillus firmus, Bacillus coagulans, Bacillus endoparasiticus, Bacillus endorhythmos, Bacillus kustaki, Bacillus lacticola, Bacillus lactimorbus, Bacillus lactis, Bacillus laterosporus, Bacillus lentimorbus, Bacillus megaterium, Bacillus medusa, Bacillus metiens, Bacillus natto, Bacillus nigrificans, Bacillus popilliae, pumilus, Bacillus siamensis, Bacillus subtilis, Bacilus licheniformis, Bacilus paralicheniformis, Bacillus amyloliquefasciens, Bacillus megaterium, Bacillus sphaericus, Bacillus thuringiensis,* and any other genus or species from the above cited order.

Fungi and mutants thereof belong to the group comprising Hypocreales, not limited to genera and species from *Trichoderma amazonicum, Trichoderma asperellum, Trichoderma atroviride, Trichoderma aureoviride, Trichoderma austrokoningii, Trichoderma brevicompactum, Trichoderma cinnamomeum, Trichoderma hamatum, Trichoderma harzianum, Trichoderma koningii, Trichoderma longibrachiatum, Trichoderma polysporum, Trichoderma pseudokoningii, Trichoderma reesei, Trichoderma stromaticum, Trichoderma virens, Trichoderma viride, Trichoderma viridescens, Clonostachys agarwalii, Clonostachys asymmetrica, Clonostachys aurantia, Clonostachys chlorina, Clonostachys compacta, Clonostachys cylindrospora, Clonostachys farinosa, Clonostachys pseudobotrytis, Clonostachys pulvinata, Clonostachys rosea, (Link) Schroers, Clonostachys spectabilis, Clonostachys theobromae, Purpuriocillium lilacinus, Pochonia bulbillosa, Pochonia chlamydosporia, Pochonia chlamydosporia var. catenulata, Pochonia globispora, Pochonia goniodes, Pochonia humicola, Pochonia microbactrospora, Pochonia parasitica, Pochonia rubescens, Pochonia suchlasporia, Metarhizium anisopliae, Metarhizium acridum, Metarhizium brunneum, Metarhizium flavoviride, Metarizium rileyi, Aschersonia cubensi, Aschersonia aleyrodis, Aschersonia australiensis, Aschersonia placenta, Isaria fumosorosea, Lecanicillium lecanni, Lecanicillium longisporum, Lecanicillium muscarium, Lecanicillium fungicola, Cordyceps militaris, Harposporium anguillulae,* and any other genus or species from the above cited order.

Fungi and mutants thereof belong to the group comprising order Orbiliales, not limited to genera and species from *Arthrobotrys ligospora, Arthrobotrys aggregata, Arthrobotrys alaskana, Arthrobotrys amerospora, Arthrobotrys botryospora, Arthrobotrys brochopaga, Arthrobotrys conoides, Arthrobotrys constringens, Arthrobotrys cylindrospora, Arthrobotrys dactyloides, Arthrobotrys elegans Arthrobotrys ellipsospora, Arthrobotrys entomopaga, Arthrobotrys globospora, Arthrobotrys irregulares, Arthrobotrys javanica, Arthrobotrys longispora, Arthrobotrys musiformis, Arthrobotrys nematopaga, Arthrobotrys oligospora, Dactylaria haptotyla, Dactylaria purpurella, Dactylaria scaphoides, Dactylaria brochopaga, Dactylaria candida,* and any other genus or species from the above cited order.

Fungi and mutants thereof belong to the group comprising order Helotiales, not limited to genera and species from *Monacrosporium robustum, Monacrosporium appendiculatum, Monacrosporium ellipsosporum, Monacrosporium eudermatum, Monacrosporium fusiforme, Monacrosporium globosporum, Monacrosporium leptosporum, Monacrosporium cionopagu, Dactylella alba, Dactylella aphrobrocha, Dactylella arcuata, Dactylella arnaudii, Dactylella atractoides, Dactylella attenuata, Dactylella candida, Dactylella cionopaga, Dactylella fusiformis, Dactylella heterospora, Dactylella intermedia, Dactylella oxyspora, Dactylella ramosa,* and any other genus or species from the above cited order.

Fungi and mutants thereof belong to the group comprising order Mucorales, not limited to genera and species from *Cunninghamella elegans,* and any other genus or species from the above cited order.

The agrochemicals consist of:
**a) Insecticides** - capsaicin, cartap, celastrus extract, chlorantraniliprole, chlorbenzuron, chlorethoxyfos, chlorfluazuron, chlorpyrifose, cnidiadin, cryolite, cyanophos, cyantraniliprole, cyclaniliprole, cyhalothrin, cyhexatin, cypermethrin, dacnusa, DCIP, dichloropropene, dicofol, diglyphus, diglyphus+dacnusa, dimethacarb, dithioether, dodecylacetate, emamectin, encarsia, EPN, eretmocerus, ethylene-dibromide, eucalyptol, fatty acids, fatty acids/salts, fenazaquin, fenobucarb (BPMC), flubrocythrinate, flufenzine, formetanate, formothion, furathiocarb, gamma-cyhalothrin, granulosis virus, NPV, indol-3-ylbutyric acid, iodomethane, isocarbofos, isofenphos, isofenphos-m, isoprocarb, isothioate, kaolin, lindane, liuyangmycin, mephosfolan, metaldehyde, methamidophos, metolcarb (MTMC), mineral oil, m-isothiocyanate, monosultap, oleic acid, omethoate, onus, oxymatrine, paecilomyces, parathion-e, pasteuria, pheromones, phosphorus-acid, photorhabdus, phoxim, phytoseiulus, pirimiphos-e, polihedrosis virus, potassium oleate, prothiofos, pyraclofos, pyrethrinas, pyridaphenthion, pyrimidifen, pyriproxifen, sulfluramid, tebupirimfos, tefluthrin, temephos, tetradifon, thiofanox, thiometon, triazamate, triflumuron, vertrine, kappa-bifenthrin, kappa-tefluthrin, dichoromezotiaz, broflanilide, pyraziflumid, aldicarb, alanycarb, benfuracarb, carbaryl, carbofuran, carbosulfan, methiocarb, methomyl, oxamyl, pirimicarb, propoxur, and thiodicarb, acephate, azinphos-ethyl, azinphos-methyl, chlorfenvinphos, chlorpyrifos, chlorpyrifos-methyl, demeton-S-methyl, diazinon, dichlorvos/DDVP, dicrotophos, dimethoate, disulfoton, ethion, fenitrothion, fenthion, isoxathion, malathion, methamidaphos, methidathion, mevinphos, monocrotophos, oxymethoate, oxydemeton-methyl, parathion, parathion-methyl, phenthoate, phorate, phosalone, phosmet, phosphamidon, pirimiphos-methyl, quinalphos, terbufos, tetrachlorvinphos, triazophos, trichlorfon, endosulfan, ethiprole, fipronil, pyrafluprole, pyriprole, acetamiprid, clothianidin, dinotefuran, imidacloprid, nitenpyram, thiacloprid, thiamethoxam, spinosad, spinetoram, mectins, abamectin, emamectin benzoate, ivermectin, lepimectin, milbemectin, hydroprene, kinoprene, methoprene, fenoxycarb, pyriproxyfen; pymetrozine, flonicamid, pyrifluquinazon, clofentezine, hexythiazox, etoxazole, diafenthiuron, fenbutatin oxide, propargite, chlorfenapyr, bensultap, cartap hydrochloride, thiocydam, thiosultap sodium, bistrifluron, diflubenzuron, flufenoxuron, hexaflumuron, lufenuron, novaluron, teflubenzuron, buprofezin, cyromazine, methoxyfenozide, tebufenozide, halofenozide, chromafenozide, amitraz, pyridaben, tebufenpyrad, tolfenpyrad, flufenerim, cyenopyrafen, cyflumetofen, hydramethylnon, acequinocyl, fluacrypyrim, indoxacarb, metaflumizone, spirodiclofen, spiromesifen, spirotetramat, flubendiamide, chlorantraniliprole, cyclaniliprole, cyantraniliprole, azadirachtin, amidoflumet, bifenazate, fluensulfone, piperonyl butoxide, pyridalyl, sulfoxaflor, acrinathrin, allethrin, bifenthrin, cyfluthrin, lambda-cyhalothrin, cypermethrin, alpha-cypermethrin, beta-cypermethrin, zeta-cypermethrin, deltamethrin, esfenvalerate, etofenprox, fenpropathrin, fenvalerate, flucythrinate, tau-fluvalinate, permethrin, silafluofen, and tralomethrin, among others;
**b) Fungicides:** benzovindiflupyr, antiperonosporic, ametoctradin, amisulbrom, copper hydroxide, copper oxychloride, copper sulfate, copper persulfate, boscalid, thiflumazide, flutianil, furalaxyl, thiabendazole, benodanil, mepronil, isofetamid, fenfuram, bixafen, fluxapyroxad, penflufen, sedaxane, coumoxystrobin, enoxastrobin, flufenoxystrobin, pyraoxystrobin, pyrametostrobin, triclopyricarb, fenaminstrobin, metominostrobin, pyribencarb, meptyldinocap, fentin acetate, fentin chloride, fentin hydroxide, oxytetracycline, chlozolinate, chloroneb, tecnazene, etridiazole, iodocarb, prothiocarb, pyrisoxazole, oxpoconazole, etaconazole, fenpyrazamine, fenpicoxamide, mefentrifluconazole, naftifine, terbinafine, validamycin, pyrimorph, valifenalate, fthalide, probenazole, isotianil, laminarin, teclofthalam, triazoxide, pyriofenone, chlorothalonil, fluoroimide, bitertanol, bromuconazole, cyproconazole, difenoconazole, diniconazole, enilconazole, epoxiconazole, fluquinconazole, fenbuconazole, flusilazole, flutriafol, hexaconazole, imibenconazole, ipconazole, metconazole, myclobutanil, penconazole, propiconazole, prothioconazole, simeconazole, triadimefon, triadimenol, tebuconazole, tetraconazole, triticonazole, prochloraz, pefurazoate, imazalil, triflumizole, cyazofamid, benomyl, carbendazim, thiabendazole, fuberidazole, ethaboxam, etridiazole and hymexazole, azaconazole, diniconazole-M, oxpoconazol, paclobutrazol, uniconazol, 1-(4-chloro-phenyl)-2-([1,2,4]triazol-1-yl)-cycloheptanol, imazalilsulfphate, azoxystrobin, dimoxystrobin, enestroburin, fluoxastrobin, kresoxim-methyl, methominostrobin, orysastrobin, picoxystrobin, pyraclostrobin, trifloxystrobin, enestroburin, methyl (2-chloro-5-[1-(3-methylbenzyloxyimino)ethyl]benzyl) carbamate, methyl (2-chloro-5-[1-(6-methylpyridin-2-ylmethoxyimino)ethyl]benzyl)carbamate, methyl 2-(ortho-(2,5-dimethylphenyloxymethylene)-phenyl)-3-methoxyacrylate, 2-(2-(6-(3-chloro-2-methyl-phenoxy)-5-fluoro-pyrimidin-4-yloxy)-phenyl)-2-methoxyimino-N-methyl-acetamide, 3-methoxy-2-(2-(N-(4-methoxy-phenyl)-cyclopropanecarboximidoylsulfanylmethyl)-phenyl)-acrylic acid methyl ester; carboxin, benalaxyl, benalaxyl-M, fenhexamid, flutolanil, furametpyr, mepronil, metalaxyl, mefenoxam, ofurace, oxadixyl, oxycarboxin, penthiopyrad, isopyrazam, thifluzamide, tiadinil, 3,4-dichloro-N-(2-cyanophenyl)isothiazole-5-carboxamide, dimethomorph, flumorph, flumetover, fluopicolide (picobenzamid), zoxamide, carpropamid, diclocymet, mandipropamid, N-(2-(4-[3-(4-chlorophenyl)prop-2-ynyloxy]-3-methoxyphenyl)ethyl)-2-methanesulfonyl-amino-3-methylbutyramide, N-(2-(4-[3-(4-chloro-phenyl)prop-2-ynyloxy]-3-methoxy-phenyl)ethyl)-2-ethanesulfonylamino-3-methylbutyramide, methyl 3-(4-chlorophenyl)-3-(2-isopropoxycarbonylamino-3-methyl-butyrylamino)propionate, N-(4'-bromobiphenyl-2-yl)-4-difluoromethyl-2-methylthiazole-5-carboxamide, N-(4'-trifluoromethyl-biphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(3',4'-dichloro-4-fluorobiphenyl-2-yl)-3-difluoro-methyl-1-methylpyrazole-4-carboxamide, N-(3',4'-dichloro-5-fluorobiphenyl-2-yl)-3-difluoromethyl-1-methylpyrazole-4-carboxamide, N-(2-cyano-phenyl)-3,4-dichloroisothiazole-5-carboxamide, 2-amino-4-methylthiazole-5-carboxanilide, 2-chloro-N-(1,1,3-trimethyl-indan-4-yl)-nicotinamide, N-(2-(1,3-dimethylbutyl)-phenyl)-1,3-dimethyl-5-fluoro-1H-pyrazole-4-carboxamide, N-(4'-chloro-3',5-difluoro-biphenyl-2-yl)-3-difluoromethyl-1-methyl-1H-pyrazole-4-carboxamide, N-(4'-chloro-3',5-difluoro-biphenyl-2-yl)-3-trifluoromethyl-1-methyl-1H-pyrazole-4-carboxamide, N-(3',4'-dichloro-5-fluoro-biphenyl-2-yl)-3-trifluoromethyl-1-methyl-1H-pyrazole-4-carboxamide, N-(3',5-difluoro-4'-methyl-biphenyl-2-yl)-3-difluoromethyl-1-methyl-1H-pyrazole-4-carboxamide, N-(3',5-difluoro-4'-methyl-biphenyl-2-yl)-3-trifluoromethyl-1-methyl-14H-pyrazole-4-carboxamide, N-(cis-2-bicyclopropyl-2-yl-phenyl)-3-difluoromethyl-1-methyl-1H-pyrazole-4-carboxamide, N-(trans-2-bicyclopropyl-2-yl-phenyl)-3-difluoro-methyl-1-methyl-1H-pyrazole-4-carboxamide, fluopyram, N-(3-ethyl-3,5-5-trimethyl-cyclohexyl)-3-formyl-amino-2-hydroxy-benzamide, oxytetracyclin, silthiofam, N-(6-methoxy-pyridin-3-yl)cyclopropanecarboxamide, 2-iodo-N-phenylbenzamide, N-(2-bicyclo-propyl-2-yl-phenyl)-3-difluormethyl-1-methylpyrazol-4-ylcarboxamide, N-(3',4',5'-trifluorobiphenyl-2-yl)-1,3-dimethylpyrazol-4-ylcarboxamide, N-(3',4',5'-trifluorobiphenyl-2-yl)-1,3-dimethyl-5-fluoropyrazol-4-ylcarboxamide, N-(3',4',5'-trifluorobiphenyl-2-yl)-5-chloro-1,3-dimethyl-pyrazol-4-ylcarboxamide, N-(3',4',5'-trifluorobiphenyl-2-yl)-3-fluoromethyl-1-methylpyrazol-4-ylcarboxamide, N-(3',4',5'- trifluorobiphenyl-2-yl)-3-(chlorofluoromethyl)-1-methylpyrazol-4-ylcarboxamide, N-(3',4',5'-trifluorobiphenyl-2-yl)-3-difluoromethyl-1-methylpyrazol-4-ylcarboxamide, N-(3',4',5'-trifluorobiphenyl-2-yl)-3-difluoromethyl-5-fluoro-1-methylpyrazol-4-ylcarboxamide, N-(3',4',5'-trifluorobiphenyl-2-yl)-5-chloro-3-difluoromethyl-1-methylpyrazol-4-ylcarboxamide, N-(3',4',5'-trifluorobiphenyl-2-yl)-3-(chlorodifluoromethyl)-1-methylpyrazol-4-ylcarboxamide, N-(3',4',5'-trifluorobiphenyl-2-yl)-1-methyl-3-trifluoromethylpyrazol-4-ylcarboxamide, N-(3',4',5'-trifluorobiphenyl-2-yl)-5-fluoro-1-methyl-3-trifluoromethylpyrazol-4-ylcarboxamide, N-(3',4',5'-trifluorobiphenyl-2-yl)-5-chloro-1-methyl-3-trifluoromethylpyrazol-4-ylcarboxamide, N-(2',4',5'-trifluorobiphenyl-2-yl)-1,3-dimethylpyrazol-4-ylcarboxamide, N-(2',4',5'-trifluorobiphenyl-2-yl)-1,3-dimethyl-5-fluoropyrazol-4-ylcarboxamide, N-(2',4',5'-trifluorobiphenyl-2-yl)-5-chloro-1,3-dimethylpyrazol-4-ylcarboxamide, N-(2',4',5')-trifluorobiphenyl-2-yl)-3-fluoromethyl-1-methylpyrazol-4-ylcarboxamide, N-(2',4',5'-trifluorobiphenyl-2-yl)-3-(chlorofluoromethyl)-1-methylpyrazol-4-ylcarboxamide, N-(2',4',5'-trifluorobiphenyl-2-yl)-3-difluoromethyl-1-methylpyrazol-4-ylcarboxamide, N-(2',4',5'-trifluorobiphenyl-2-yl)-3-difluoromethyl-5-fluoro-1-methylpyrazol-4-ylcarboxamide, N-(2',4',5'-trifluorobiphenyl-2-yl)-5-chloro-3-difluoromethyl-1-methylpyrazol-4-ylcarboxamide, N-(2',4',5'-trifluorobiphenyl-2-yl)-3-(chlorodifluoromethyl)-1-methylpyrazol-4-ylcarboxamide, N-(2',4',5'-trifluorobiphenyl-2-yl)-1-methyl-3-trifluoromethylpyrazol-4-ylcarboxamide, N-(2',4',5'-trifluorobiphenyl-2-yl)-5-fluoro-1-methyl-3-trifluoromethylpyrazol-4-ylcarboxamide, N-(2',4',5'-trifluorobiphenyl-2-yl)-5-chloro-1-methyl-3-trifluoromethylpyrazol-4-ylcarboxamide, N-(3',4'-dichloro-3-fluorobiphenyl-2-yl)-1-methyl-3-trifluoromethyl-1H-pyrazole-4-carboxamide, N-(3',4'-dichloro-3-fluorobiphenyl-2-yl)-1-methyl-3-difluoromethyl-1H-pyrazole-4-carboxamide, N-(3',4'-difluoro-3-fluorobiphenyl-2-yl)-1-methyl-3-trifluoromethyl-1H-pyrazole-4-carboxamide, N-(3',4'-difluoro-3-fluorobiphenyl-2-yl)-1-methyl-S-difluoromethyl-1H-pyrazole-4-carboxamide, N-(3'-chloro-4'-fluoro-3-fluorobiphenyl-2-yl)-1-methyl-3-difluoromethyl-1H-pyrazole-4-carboxamide, N-(3',4'-dichloro-4-fluorobiphenyl-2-yl)-1-methyl-3-trifluoromethyl-1H-pyrazole-4-carboxamide, N-(3',4'-difluoro-4-fluorobiphenyl-2-yl)-1-methyl-S-trifluoromethyl-1H-pyrazole-4-carboxamide, N-(3',4'-dichloro-4-fluorobiphenyl-2-yl)-1-methyl-3-difluoromethyl-1H-pyrazole-4-carboxamide, N-(3',4'-difluoro-4-fluorobiphenyl-2-yl)-1-methyl-3-difluoromethyl-1H-pyrazole-4-carboxamide, N-(3'-chloro-4'-fluoro-4-fluorobiphenyl-2-yl)-1-methyl-5-difluoromethyl-1H-pyrazole-4-carboxamide, N-(3',4'-dichloro-5-fluorobiphenyl-2-yl)-1-methyl-3-trifluoromethyl-1H-pyrazole-4-carboxamide, N-(3',4'-difluoro-5-fluorobiphenyl-2-yl)-1-methyl-3-trifluoromethyl-1H-pyrazole-4-carboxamide, N-(3',4'-dichloro-5-fluorobiphenyl-2-yl)-1-methyl-5-difluoromethyl-1H-pyrazole-carboxamide, N-(3',4'-difluoro-5-fluorobiphenyl-2-yl)-1-methyl-3-difluoromethyl-1H-pyrazole-4-carboxamide, N-(3',4'-dichloro-5-fluorobiphenyl-2-yl)-1,3-dimethyl-1H-pyrazole-4-carboxamide, N-(3'-chloro-4'-fluoro-5-fluorobiphenyl-2-yl)-1-methyl-3-difluoromethyl-1H-pyrazole-4-carboxamide, N-(4'-fluoro-4-fluorobiphenyl-2-yl)-1-methyl-3-trifluoromethyl-1H-pyrazole-4-carboxamide, N-(4'-fluoro-5-fluorobiphenyl-2-yl)-1-methyl-3-trifluoromethyl-1H-pyrazole-4-carboxamide, N-(4'-chloro-5-fluorobiphenyl-2-yl)-1-methyl-3-trifluoromethyl-1H-pyrazole-4-carboxamide, N-(4'-methyl-5-fluorobiphenyl-2-yl)-1-methyl-3-trifluoromethyl-1H-pyrazole-4-carboxamide, N-(4'-fluoro-5-fluorobiphenyl-2-yl)-1,3-dimethyl-1H-pyrazole-4-carboxamide, N-(4'-chloro-5-fluorobiphenyl-2-yl)-1,3-dimethyl-1H-pyrazole-4-carboxamide, N-(4'-methyl-5-fluorobiphenyl-2-yl)-1,3-dimethyl-1H-pyrazole-4-carboxamide, N-(4'-fluoro-6-fluorobiphenyl-2-yl)-1-methyl-3-trifluoromethyl-1H-pyrazole-4-carboxamide, N-(4'-chloro-6-fluorobiphenyl-2-yl)-1-methyl-3-trifluoromethyl-1H-pyrazole-4-carboxamide, N-[2-(1,1,2,3,3,3-hexafluoropropoxy)-phenyl]-3-difluoromethyl-1-methyl-1H-pyrazole-4-carboxamide, N-[4'-(trifluoromethylthio)-biphenyl-2-yl]-3-difluoromethyl-1-methyl-1H-pyrazole-4-carboxamide, and N-[4'-(trifluoromethylthio)-biphenyl-2-yl]-1-methyl-3-trifluoromethyl-1-methyl-1H-pyrazole-4-carboxamide, fluazinam, pyrifenox, bupirimate, cyprodinil, fenarimol, ferimzone, mepanipyrim, nuarimol, pyrimethanil, triforine, fenpiclonil, fludioxonil, aldimorph, dodemorph, fenpropimorph, tridemorph, fenpropidin, iprodione, procymidone, vinclozolin, famoxadone, fenamidone, octhilinone, probenazole, 5-chloro-7-(4-methyl-piperidin-1-yl)-6-(2,4,6-trifluorophenyl)-[1,2,4]triazolo[1,5-a]pyrimidine, anilazine, diclomezine, pyroquilon, proquinazid, tricyclazole, 2-butoxy-6-iodo-3-propylchromen-4-one, acibenzolar-5-methyl, captafol, captan, dazomet, folpet, fenoxanil, quinoxyfen, N,N-dimethyl-3-(3-bromo-6-fluoro-2-methylindole-1-sulfonyl)-[1,2,4]triazole-1-sulfonamide, 5-ethyl-6-octyl-[1,2,4]triazolo[1,5-a]pyrimidin-2,7-diamine, 2,3,5,6-tetrachloro-4-methanesulfonyl-pyridine, 3,4,5-trichloro-pyridine-2,6-di-carbonitrile, N-(1-(5-bromo-3-chloro-pyridin-2-yl)-ethyl)-2,4-dichloro-nicotinamide, N-((5-bromo-3-chloropyridin-2-yl)-methyl)-2,4-dichloro-nicotinamide, diflumetorim, nitrapyrin, dodemorphacetate, fluoroimid, blasticidin-S, chinomethionat, debacarb, difenzoquat, difenzoquat-methylsulphat, oxolinic acid, piperalin, mancozeb, maneb, metam, methasulphocarb, metiram, ferbam, propineb, thiram, zineb, ziram, diethofencarb, iprovalicarb, benthiavalicarb, propamocarb, propamocarb hydrochlorid, 4-fluorophenyl N-(1-(1-(4-cyanophenyl)-ethanesulfonyl)but-2-yl)carbamate, methyl 3-(4-chlorophenyl)-3-(2-isopropoxycarbonylamino-3-methylbutyryl-amino)propanoate, guanidine, iminoctadine, guazatine, kasugamycin, oxytetracyclin, streptomycin, polyoxin, validamycin, binapacryl, dinocap, dinobuton, sulfur-containing heterocyclyl compounds: dithianon, isoprothiolane, edifenphos, iprobenfos, fosetyl, fosetyl-aluminum, pyrazophos, tolclofos-methyl, dichlofluanid, flusulfamide, hexachloro-benzene, phthalide, pencycuron, quintozene, thiophanate, thiophanatemethyl, cyflufenamid, cymoxanil, dimethirimol, ethirimol, furalaxyl, metrafenone and spiroxamine, guazatine-acetate, inunoctadine-triacetate, iminoctadinetris (albesilate), kasugamycin hydrochloride hydrate, dichlorophen, pentachlorophenol, and its salts, N-(4-chloro-2-nitro-phenyl)-N-ethyl-4-methyl-benzenesulfonamide, dicloran, nitrothal-isopropyl, tecnazen, biphenyl, bronopol, diphenylamine, mildiomycin, oxincopper, prohexadione calcium, N-(cyclopro-pylmethoxyimino-(6-difluoromethoxy-2,3-difluoro-phenyl)-methyl)-2-phacetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethylphenyl)-N-ethyl-N-methyl formamidine, N'-(2-methyl-5-trifluormethyl-4-(3-trimethylsilanyl-propoxy)-phenyl)-N-ethyl-N-methyl formamidine, and N'-(5- difluormethyl-2-methyl-4-(3-trimethylsilanyl-propoxy)-phenyl)-N-ethyl-N-methyl formamidine;
**c) Herbicides:** alloxydim, clethodim, cloproxydim, cycloxydim, sethoxydim, tralkoxydim, butroxydim, clefoxydim, tepraloxydim; phenoxyphenoxypropionic ester, clodinafop-propargyl, cyhalofop-butyl, diclofop-methyl, fenoxa propethyl, fenoxaprop-P-ethyl, fenthiapropethyl, fluazifopbutyl, fluazifop-P-butyl, haloxyfop-ethoxyethyl, haloxyfop-methyl, haloxyfop-P-methyl, isoxapyrifop, propaquizafop, quizalofop-ethyl, quizalofop-P-ethyl or quizalofop-tefuryl, flamprop-methyl, flamprop-isopropyl, imazapyr, imazaquin, imazamethabenz-methyl (imazame), imazamox, imazapic, imazethapyr, pyrithiobac-acid, pyrithiobac-sodium, bispyribac-sodium, pyribenzoxym, florasulam, flumetsulam, metosulam, amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, halosulfuron-methyl, imazosulfuron, metsulfuron-methyl, nicosulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, tritosulfuron, sulfosulfuron, foramsulfuron, iodosulfuron, benzoyl propethyl, bromobutide, chiorthiamid, diphenamid, etobenzanidibenzchlomet, fluthiamide, fosamin, monalide, clopyralid, picloram, 2,4-D,benazolin, naptalame, diflufenzopyr, benzofenap, clomazone, diflufenican, fluorochloridone, fluridone, pyrazolynate, pyrazoxyfen, isoxaflutole, isoxachlortole, mesotrione, sulcotrione, ketospiradox, flurtamone, norflurazon, amitrol, glyphosate, sulfosate, bilanafos, glufosinateammonium, anilofos, mefenacet, dimethenamid, S-dimethenamid, acetochlor, alachlor, butachlor, butenachlor, diethatyl-ethyl, dimethachlor, metazachlor, metolachlor, S-metolachlor, pretilachlor, propachlor, prynachlor, terbuchlor, thenylchlor, xylachlor, butylate, cycloate, di-allate, dimepiperate, EPTC, esprocarb, molinate, pebulate, pro sulfocarb, thiobencarb, tri-allate, vemolate; benfuresate, perfluidone; asulam, carbetamid, chlorpropham, orbencarb, pronamid, propham, tiocarbazil benefin, butralin, dinitramin, ethalfluralin, fluchloralin, oryzalin, pendimethalin, prodiamine, trifluralin dithiopyr, thiazopyr, butamifos, chlorthal-dimethyl (DCPA), acifluorfen, acifluorfen-sodium, aclonifen, bifenox, chlomitrofen (CNP), ethoxyfen, fluorodifen, fluoroglycofenethyl, fomesafen, furyloxyfen, lactofen, nitrofen, nitrofluorfen or oxyfluorfen, oxadiargyl, oxadiazon, azafenidin, butafenacil, carfentrazone-ethyl, cinidon-ethyl, flumiclorac-pentyl, flumioxazin, flumipropyn, flupropacil, fluthiacet-methyl, sulfentrazone, thidiazimin, nipyraclofen, propanil, pyridate or pyridafol, bromofenoxim, dinoseb, dinoseb-acetate, dinoterb, cyperquat-chloride, difenzoquat-methylsulfate, diquat or paraquatdichloride, chlorbromuron, chlorotoluron, difenoxuron, dimefuron, diuron, ethidimuron, fenuron, fluometuron, isoproturon, isouron, linuron, methabenzthiazuron, methazole, metobenzuron, metoxuron, monolinuron, neburon, siduron, tebuthiuron, bromoxynil, ioxynil, chloridazon, ametryn, atrazine, cyanazine, desmein, dimethamethryn, hexazinone, prometon, prometryn, propazme, simazme, simetryn, terbumeton, terbutryn, terbutylazine, trietazine, metamitron, metribuzin bromacil, lenacil, terbacil, desmedipham, phenmedipham, tridiphane, isoxaben, dichlobenil, dalapon, ethofumesate, chlorfenac, aziprotryn, barban, bensulide, benzthiazuron, benzofluor, buminafos, buthidazole, buturon, cafenstrole, chlorbufam, chlorfenprop-methyl, chloroxuron, cinmethylin, cumyluron, cycluron, cyprazme, cyprazole, dibenzyluron, dipropetryn, dymron, eglinazin-ethyl, endothall, ethiozin, flucabazone, fluorbentranil, flupoxam, isocarbamid, isopropalin, karbutilate, mefluidide, monuron, napropamide, napropanilide, nitralin, oxaciclomefone, phenisopham, piperophos, procyazine, profluralin, pyributicarb, secbumeton, sulfallate (CDEC), terbucarb, triaziflam, triazofenamid, trimeturon, among others;
**d) Nematicides:** Benomyl, cloethocarb, aldoxycarb, tirpate, diamidafos, fenamiphos, cadusafos, dichlofenthion, ethoprophos, fensulfothion, fosthiazate, heterophos, isamidofof, isazofos, phosphocarb, thionazin, imicyafos, mecarphon, acetoprole, benclothiaz, chloropicrin, dazomet, fluensulfone, 1,3-dichloropropene (telone), dimethyl disulfide, metam sodium, metam potassium, methyl bromide, allyl isothiocyanate (AITC), dimethyl sulfate, furfual (aldehyde), among others.

The essential oils and plant extracts obtained from seeds, plants and parts of plants belong to the group consisting of: *Ricinus communis, Crotalaria juncea, Chenopodium ambrosioides, Aradirachta indica, Verbena officinalis, Erythrina mulungu, Quassia amara, Bidens pilosa, Plantago lanceolata, Senecio brasiliensis, Lantana camara, Tagetes patula, Lantana montevidensis, Eucalyptus spp., Lantana montevidensis, Lantana camara, Senecio brasiliensis, Chrysantemum coronarium, Solanum americanum, Solanum paniculatum Hovenia dulcis, Melia azedarach, Butia eriospatha, Schinus terenbithifolius, Cinnamomum camphora, Conyza bonariensis, Senecio brasiliensis, Bidens pilosa, Amaranthus hybridus, Euphorbia heterophylla, Raphanus sativus, Ipomoea purpurea, Brachiaria plantaginea, Ruta graveolens, Aloysia triphylla, Brassica napus, Mucuna pruriens, Ocimum gratissimum, Lippia sidoides, Croton zehntneri, Mentha piperita, Cymbopogon martinii, Cymbopogon schoenanthus, Piper aduncum, Arisaema franchetianum, Zanthoxylum simulans, Ruta chalepensis, Citrus sinensis, Melaleuca quinquenervia, Cymbopogon citratus, Thymus vulgaris, Piper aduncum, Melaleuca alternifolia, Hesperozygis myrtoides,* and other species from the above cited genera.

The additives are dispersants selected from the group consisting of water-soluble ionic polymers, amino-acids, algae extracts, naturally occurring compounds, water-soluble anionic polymers, surfactants selected from the group consisting of anionic surfactants and non-anionic surfactants, and combinations and derivatives thereof.

The excipients belong to the group consisting of: silicas, talc, bentonite, carbohydrates, sugars, starches, carbonates, casein, whey and milk products, and combinations and derivatives thereof.

The compositions can be used as an encapsulated suspension formulation, dispersible concentrate, emulsifiable concentrate, water-in-oil emulsion, oil-in-water emulsion, microemulsion, concentrated suspension, suspo-emulsion, soluble granulate, soluble concentrate, soluble powder, tablet, dispersible granulate, wettable powder, emulsifiable gel, water-soluble gel, emulsifiable granule, emulsifiable powder, oil dispersion or oil concentrated suspension, mixed formulation of soluble concentrate and concentrated suspension, mixed formulation of soluble concentrate and suspo-emulsion, mixed formulation of soluble concentrate and oil-in-water emulsion, concentrated oil-dispersible or miscible suspension, oil-miscible solution, oil-dispersible powder, encapsulated granulate, dry powder, electrostatic/electrodynamic spray liquid, granulate, spray/spread oil, ultra-low volume suspension, ultra-low volume micro-granulate, thin powder, thin granulate, macrogranulate, encapsulate, microencapsulate and nanoencapsulate.

The multipurpose biological compositions are for the biological control of phytopathogens, phytonematodes and agricultural pests, inoculants, phosphorus solubilization, soil conditioning, bioestimulant, reduction of hydric stress in cultivated plants and bioremediation in cultivatable or other areas with nematicidal effects on the reduction of damages and control of phytonematodes, not limited to *Pratylenchus brachyurus, Pratylenchus zea, Meloidogyne incognita, Meloidogyne javanica, Heterodera glycines, Rotylenchulus reniformis, Pratylenchus coffea, Meloidogyne exigua, Helicotilechus dihystera, Meloidogyne exigua, Meloidogyne paranaensis, Meloidogyne coffeicola, Meloidogyne hapla, Melo idogyn e enterolobii, Melo idogyne arabicidae, Meloidogyne arenaria, Pralylenchus brachiurus, Pralylenchus coffea, Pratylenchus zeae Xiphinema krugi, Heterodera glycines, Helicotylenchus sp., Paratrichodorus sp., Tylenchorhynchus sp., Scutellonema sp., Aphelenchoides spp., Aphelenchus spp., Mesocriconema sp., Tylenchus sp.,* among others, with fungicidal effects on the reduction of damages and control, not limited to *Phakopsora pachyrhizi. Corynespora cassiicola, Puccinia polysora, Exserohilum turcicum, Xanthomonas axonopodis, Ramularia areola, Hemileia vastatrix, Cercospora coffeicola, Phoma spp., Pseudomonas syringae, Pseudomonas corrugata, Rhizoctonia solani, Fusarium solani, Fusarium oxysporum, Fusarium graminearum, Fusarium semitectum, Colletotrichum gloeosporioides, Colletotrichum truncatum, Colletotrichum lindemuthianum, Macrophomna phaseolina, Sclerotinia sclerotiorum, Botrytis cinerea, Penicillium digitatum,* with insecticidal and acaricidal effects on the reduction of damages and control, not limited to the following pests: *Polyphagotarsonemus latus, Tetranychus urticae, Diabrotica speciosa, Anticarsia gemmatalis, Spodoptera cosmioides, Spodoptera frugiperda, Pseudoplusia includens, Trichoplusia ni, Bemisia tabaci, Euschistos heros, Nezara viridula, Leucoptera coffeella, Hypothenemus hampei, Oligonychus ilicis, Polyphagotarsonemus latus, Brevipalpus phoenicis, Planococcus citri, Planococcus minor, Helicoverpa armigera,* with an action of growth promotion, soil conditioning, bioestimulant, mitigation of the hydric stress of cultivated plants and bioremediation in cultivatable or other areas, in addition to polymers/excipients in formulations for spraying, boom spraying, aerial spraying, low volume, ultra-low volume, plant furrow spraying, drench, coating (either industrially or not), treatment (either industrially or not) and incrustation (either industrially or not) of crop seeds, not limited to *Coffea spp (Coffea arabica, Coffea canefora, Coffea robusta), Glycine max, Zea mays, Gossypium hirsutum,* greens (*Solanum lycopersicum, Allium cepa, Lactuca sativa, Daucus carota, Capsicum annuum Group*), forest trees *(Eucalyptus spp., Tectona grandis, Hevea brasiliensis, Pinus sp.), Nicotiana tabacum,* ornamental plants, fruit trees *(Citrus spp., Malus spp., Carica papaya, Vitis spp., Cucumis melo, Prunus persica, Passiflora edulis),* Brachiaria spp. *(Brachiaria brizantha, Brachiaria decumbens, Brachiaria humidicola, Brachiaria mutica, Brachiaria ruziziensis, Brachiaria arrecta, Brachiaria dictyneura), Panicum spp. (Panicum maximum), Sorghum spp., Pennisetum americanum,* crotalaria *(Crotalaria juncea, Crotalaria spectabilis, Crotalaria ochroleuca, Crotalaria paulina, Crotalaria breviflora),* and other species from the above cited genera.

By way of example, in the provision of at least 2 (two) genera and/or species of: Bacillus and mutants thereof; Bacillus mixed with fungi from orders Hypocreales, Orbiliales, Helotiales and Mucorales, and combinations among same or part of same (in colony forming units, CFU) together with or separated from agrochemicals (fungicides, insecticides, acaricides, herbicides and nematicides), essential oils of plants or plant extracts, we have:

### Example 1:

- *Bacillus amyloliquefasciens* (CPQBA 040-11 DRM 01 strain) - 1.0 x 10⁹ CFU/g
- *Bacillus amyloliquefasciens* (CPQBA 040-11 DRM 04 strain) - 1.0 x 10⁹ CFU/g

**Example 2:**

| | |
|---|---|
| • *Bacillus amyloliquefasciens*: | 1.0 x 10⁹ CFU/g |
| • *Bacillus liqueniformis*: | 1.0 x 10⁹ CFU/g |

**Example 3:**

| | |
|---|---|
| • *Bacillus subtilis:* | 1.0 x 10⁹ CFU/g |
| • *Bacillus amyloliquefaciens*: | 1.0 x 10⁹ CFU/g |
| • *Trichoderma harzianum*: | 1.0 x 10⁷ CFU/g |

**Example 4:**

| | |
|---|---|
| • *Beauveria bassiana:* | 1.0 x 10⁹ CFU/g |
| • *Bacillus thuringiensis:* | 1.0 x 10⁹ CFU/g |
| • *Aschersonia aleyrodis:* | 1.0 x 10⁷ CFU/g |

**Example 5:**

| | |
|---|---|
| • *Beauveria bassiana:* | 1.0 x 10⁶ CFU/g |
| • *Isaria fumosorosea:* | 1.0 x 10⁶ CFU/g |
| • *Aschersonia aleyrodis:* | 1.0 x 10⁶ CFU/g |

**Example 6:**

| | |
|---|---|
| • *Beauveria bassiana:* | 1.0 x 10⁶ CFU/g |
| • *Aschersonia aleyrodis:* | 1.0 x 10⁶ CFU/g |

By way of example, the composition can have the following concentrations:

### Example 1:

*Bacillus amyloliquefasciens* (CPQBA 040-11 DRM 01 strain): 1.0 to 20.0%
*Bacillus amyloliquefasciens* (CPQBA 040-11 DRM 04 strain): 1.0 to 20.0%
Additives: 1.0 to 20.0%
Excipients: 97.0 to 40.0%

**Example 2:**

| | |
|---|---|
| *Bacillus amyloliquefasciens:* | 1.0 to 20.0% |
| *Bacillus liqueniformis:* | 1.0 to 20.0% |
| *Melaleuca quinquenervia* oil: | 10.0 to 15.0% |
| Additives: | 1.0 to 15.0% |
| Excipients: | 86.0 to 30.0% |

**Example 3:**

| | |
|---|---|
| *Bacillus subtilis:* | 1.0 to 20.0% |
| *Bacillus amyloliquefaciens:* | 1.0 to 20.0% |
| *Trichoderma harzianum:* | 1.0 to 20.0% |
| Azoxistrobin: | 5.0 to 10.0% |
| Additives: | 1.0 to 20.0% |
| Excipients: | 92.0 to 10.0% |

**Example 4:**

| | |
|---|---|
| *Beauveria bassiana:* | 10.0 to 20.0% |
| *Bacillus thuringiensis:* | 10.0 to 20.0% |
| *Aschersonia aleyrodis:* | 10.0 to 20.0% |
| Additives: | 1.0 to 20.0% |
| Excipients: | 69.0 to 20.0% |

**Example 5:**

| | |
|---|---|
| *Beauveria bassiana:* | 10.0 to 20.0% |
| *Isaria fumosorosea:* | 10.0 to 20.0% |
| *Aschersonia aleyrodis:* | 10.0 to 20.0% |
| Additives: | 1.0 to 20.0% |
| Excipients: | 69.0 to 20.0% |

**Example 6:**

| | |
|---|---|
| *Beauveria bassiana:* | 10.0 to 20.0% |
| *Aschersonia aleyrodis:* | 10.0 to 20.0% |
| Additives: | 1.0 to 20.0% |
| Excipients: | 69.0 to 40.0%. |

### EXAMPLES OF MODES TO OBTAIN THE COMPOSITION

A composition containing 10.0% *Bacillus amyloliquefasciens* (CPQBA 040-11 DRM 01 strain), 10.0% *Bacillus amyloliquefasciens* (CPQBA 040-11 DRM 04 strain), 3% acrylic styrene polymer, 2.0% anionic surfactant and 75.0% inert material was formulated in order to evaluate its efficiency in the control of phytopathogens, biostimulation, growth promotion and soil conditioning.

A composition containing 10.0% Bacillus subtilis, 10.0% *Bacillus amyloliquefasciens,* 10.0% *Malaleuca quinquenervia* oil, 6.0% anionic surfactant and 64.0% inert material was formulated in order to evaluate its efficiency in the control of phytopathogens.

A composition containing 10.0% *Bacillus amyloliquefasciens,* 8.0% *Bacillus licheniformis,* 10% *Trichoderma harzianum,* 18.0% Araxistrobin, 7.5% anionic surfactant and 46.5% inert material was formulated in order to evaluate its efficiency in the control of phytopathogens, control of nematodes, growth promotion and soil conditioning.

A composition containing 15.0% *Beauveria bassiana,* 7.0% *Bacillus thuringiensis,* 20.0% *Aschersonia aleyrodis,* 4.0% acrylic styrene polymer, 2.5% anionic surfactant and 51.5% inert material was formulated in order to evaluate its efficiency in the control of insects.

A composition containing 15.0% *Beauveria bassiana,* 15.0% *Isaria fumosorosea,* 20.0% *Aschersonia aleyrodis,* 4.0% acrylic styrene polymer, 2.5% anionic surfactant and 43.5% inert material was formulated in order to evaluate its efficiency in the control of insects.

A composition containing 15.0% *Beauveria bassiana,* 20.0% *Aschersonia aleyrodis,* 4.0% acrylic styrene polymer, 2.5% anionic surfactant and 58.5% inert material was formulated in order to evaluate its efficiency in the control of insects.

The compositions for the biological control of phytopathogens, phytonematodes and insects, inoculants, soil conditioners, bioestimulants, hydric stress reducers in plants and bioremediation shall follow the flow of events below:
- Raw material: the raw material that will make out the product shall be received and handled by skilled people;
- Mixture: the raw material shall be weighed and mixed following the standard operational procedure (SOP) at the indicated proportions;
- Sampling: after the mixture, samples shall be taken in order to check and certify the product guarantee. The number of colony forming units (CFU/g or CFU/ml) of product;
- Packing: the formulated product complying with the guarantee specifications shall be packed in previously labeled 1.0, 5.0 and 10.0 kg/l plastic bottles. The bottles/pouches are sealed and closed;
- Storage: The bottles/pouches are accommodated on pallets and stored in a dry, aired light-protected place, and maintained in this condition until they are dispatched.

The present invention can be applied through spraying, boom spraying, aerial spraying, low volume, ultra-low volume, planting furrow spraying, drench, coating (either industrially or not), treatment (either industrially or not) and incrustation (either industrially or not) of crop seeds for the biological control of phytopathogens, phytonematodes, insects and mites, inoculants, soil conditioners, bioestimulants and hydric stress reducers for cultivated plants and bioremediation. The application method shall be analyzed case after case and shall depend on the technical conditions and needs of every producer.

### ADVANTAGES ATTAINED

The use of the composition for the biological control of phytopathogens, phytonematodes, insects and mites, inoculants, soil conditioners, bioestimulants and hydric stress reducers for cultivated plants and bioremediation containing mixtures of at least 2 (two) species from *Bacillus,* or 2 (two) or more strains of the same species and mutants thereof; at least 2 (two) representatives of fungi from orders Hypocreales, Orbiliales, Helotiales and Mucorales and mutants thereof, or 2 (two) or more strains of the same species from representatives from *Bacillus* orders mixed with fungi from orders Hypocreales, Orbiliales, Helotiales and Mucorales, and combinations among same or part of same (in colony forming units, CFU) together with or separated from agrochemicals (fungicides, insecticides, acaricides, herbicides and nematicides), essential oils of plants or plant extract, provides the following advantages:
- It benefits the development of cultivated plants, providing increments in radicular growth, foliar and production parameters;
- It is an alternative to the use of fungicides, nematicides, insecticides and acaricides, thus fulfilling the interest of the society concerning more environmentally friendly products;
- It explores a wider range of mechanisms of action against phytonematodes, thus assuring higher efficiency;
- It explores a wider range of mechanisms of action against phytopathogens, thus assuring higher efficiency;
- It explores a wider range of mechanisms of action against insects and mites, thus assuring higher efficiency;
- It explores a wider range of mechanisms of action in the fixation of nitrogen into plants, thus assuring higher nutritional efficiency;
- It explores a wider range of mechanisms in soil conditioning, reducing phytopathogens and increasing the interaction with the roots and promoting the radicular and foliar growth of cultivated plants;
- It explores a wider range of mechanisms of action against abiotic stresses, mainly the hydric stress, thus assuring higher efficiency in the retention of water and productive increment;
- It explores different mechanisms of action in the degradation of substances deleterious to the environment, for instance, pesticides;
- It reduces the selection of phytonematodes, phytopathogens and chemical-resistant insects;
- It can be easily operated when used in spraying, plant furrow spraying, drench and coating, treatment and incrustation of seeds, either industrially or not;
- It can be used in constituents of coating, treatment and incrustation of seeds (either industrially or not) of *Coffea spp (Coffea arabica, Coffea canefora, Coffea robusta), Glycine max, Zea mays, Gossypium hirsutum,* greens *(Solanum lycopersicum, Allium cepa, Lactuca sativa, Daucus carota, Capsicum annuum Group),* forest trees *(Eucalyptus spp., Tectona grandis, Hevea brasiliensis, Pinus sp.), Nicotiana tabacum,* ornamental plants, fruit trees *(Citrus spp., Malus spp., Carica papaya, Vitis spp., Cucumis melo, Prunus persica, Passiflora edulis),* Brachiaria spp. *(Brachiaria brizantha, Brachiaria decumbens, Brachiaria humidicola, Brachiaria mutica, Brachiaria ruziziensis, Brachiaria arrecta, Brachiaria dictyneura), Panicum spp. (Panicum maximum), Sorghum spp., Pennisetum americanum,* crotalaria *(Crotalaria juncea, Crotalaria spectabilis, Crotalaria ochroleuca, Crotalaria paulina, Crotalaria breviflora)* and other species from the above cited genera.

The scope of the present invention should not be limited to the practical examples, but to the terms defined in the claims and equivalents thereof.

### BIBLIOGRAPHICAL REFERENCES

Alami, Y. Achouak W, Marol C, Heulin T. Rhizosphere soil aggregation and plant growth promotion of sunflowers by an exopolysaccharide-producing Rhizobium sp. Strain isolated from sunflower roots. Applied and environmental microbiology, v. 66, n. 8, p. 3393-3398, 2000.

Araújo, F.F. Inoculação de sementes com Bacillus subtilis, formulado com farinha de ostra e desenvolvimento de milho, soja e algodão. Ciências e Agrotecnologia, Lavras, v. 2, p. 456-462. 2008

Araújo, J. M. Estratégias para isolamento seletivo de Actinomicetos. In: Melo, L S. & Azevedo, J. L. Ecologia Microbiana. Jaguariúna: Embrapa, 1998. p.327-347.

Arora, N. K.; Kang, S. C.; Maheshwari, D. K. Isolation of siderophore producing strains of Rhizobium meliloti and their biocontrol potential against Macrophomina phaseolina that causes charcoal rot of groundnut. Curr Sei, v. 81, n.6, p.673-677,2001.

Arras G. & Arru S. Mechanism of action of some microbial antagonists against fungal pathogens. Annali di Microbiologia ed Enzimologia 47:97-120. 1997.

Baker, C.J.; Stavely, J.R.; Thomas, C.A.; Sasser, M. & Macfall, J.S. Inhibitory effect of Bacillus subtilis on Uromyces phaseoli and on development of rust pustules on bean leaves Phaseolus vulgaris. Phytopathology, St. Paul, 73: 1148-1152, 1983.

Bernardo, E.R.A. Eficácia do controle biológico de Rotylenchus reniformis (Linford & Oliveira, 1940) em algodoeiro (Gossypium hirsutum L.) com fungos nematófagos. Dissertação (Dissertação em Agronomia) - UNESP, J aboticabal, 74p. 2002.

Bernardo, E.R.A. Controle da mancha preta dos frutos cítricos em cultivo orgânico e convencional e do bolor verde em pós-colheita. Dissertação em Agronomia) - Unesp, Botucatu, 72p. 2007.

Bettiol, W.; Ghini, R.; Morandi, M.A.B.; Stadnik, M.J.; Kraus, U.; Stefanova, M.; Prado, A.M.C. 2008. Controle biológico de doenças de plantas na América Latina. In: Alves, S.B. & Lopes, R.B. (Eds.) Controle Microbiano de Pragas na América Latina - Avanços e desafios. Piracicaba. FEALQ. 2008. pp. 303-331.

Bird D.M.; Opperman, C.H.; Davies K.G. 2003. Interactions between bacteria and plant-parasitic nematodes: now and then. Int. J. Parasitol. 33:1269-1276. Cook, R.J.; Baker, K.F. 1983. The nature and practice of biological control of plant pathogens. St. Paul: APS, 1983. 539p.

Crawford, D. Isolation and characterization of actinmycete antagonists of a fungal root pathogen. Applied and environmetal microbiology, Washington, v.59, n.11, p.3899-3905. 1993.

Da Silva, G.J.; Vieira, J.D.; Soares, L.F.; Barros J.F,; Mendes, S.P.S.C.; Geraldine, A.M. Chemical and biological control on Pratylenchus brachyurus godfrey in soybean crop management. 50° congresso Brasileiro de fitopatologia. 2007. De Mattos, L.P.V. Controle de Guignardia citricarpa e Penicillium digitatum em laranja com óleos essenciais e agentes de biocontrole. Tese (doutorado) -Universidade Estadual Paulista, Faculdade de Ciências Agronômicas, 2010. Esposito, E.; Paulilo, S.M.; Manfio, G. P. Biodegradation of the herbicide diuron by indigenous actinomycetes. Chemsphere, New York, v.37, p.541- 548,1998.

Groth, L Actinomycetes in Karstic caves of northern Spain (Altamira and Tito Bustillo). Journal of microbiological methods. Amsterdam, v.36, p.116-122, 1999.

Hallmann, J.; Faupel, A.; Krechel, A.; Sikora, R. A.; Berg, G. Endophytic bacteria and biological control of nematodes. Bulletin OILB/SROP. 27:83-94. 2004.

Hasky-Günther, K.; Hoffmann-Hergarten, S.; Sikora, R.A. Resistance against the potato cyst nematode Globodera pallida systemically induced by the rhizobacteria Agrobacterium radiobacter (G 12) and Bacillus sphaericus (B43). Fund. Appl. Nematol. 21:511-517.1998.

Heuer, H. Analysis of actinomycete communities by specific amplification of genes encoding 16S rRNA and gel-eletrophoretic separation in denaturing gradients. Applied and environmental microbiology, Washington, v.63, n.8, p.3233-3241, 1997.

Higaki, W.A. 2012. Bacillus subtilis e abamectina no controle de Rotylenchulus reniformis e Pratylenchus brachyurus e alterações fisiológicas em algodoeiro em condições controladas. Dissertação (Mestrado em Agronomia) - Universidade do Oeste Paulista - Unoeste: Presidente Prudente -SP.

Huang, T. & Chang, M. Studies on xanthobacidin, a new antibiotic from Bacillus subtilis active against Xanthomonas. Botanical Bulletin Academia Sinica 16:137-148.1975.

Hussain, M. B. Zahir, A. Z.; Asghar, H. N.; Mubaraka, R.; Muhammad, N. Potential of Rhizobium spp. for improving growth and yield of rice (Oryza sativa L.). Soil Environ, v. 28, n. 1, p. 49-55, 2009.

Kennedy, A.C. Bacterial diversity m agroecosystems. Agriculture ecossystems & environment. Amsterdam, v.74, p.65-76,1999.

Kumar, Sudhir; Stecher, Glen; Tamura, Koichiro. MEGA 7: Molecular Evolutionary Genetics Analysis version 7.0 for bigger datasets. Molecular biology and evolution, p. msw054, 2016.

Motomura, M.; Hirooka, E. Y. Método rápido para o isolamento de microrganismos de solo com atividade antifúngica sobre Fusarium moniliforme. Arquivos de Biologia e Tecnologia, Curitiba, v. 39, n. 2, p. 313- 322,1996.

Padilha, G. Biologia molecular de Streptomyces e aplicações industriais. In: Melo, L S. & Azevedo, J. L. Ecologia Microbiana. Jaguariúna: Embrapa, 1998. p.327-347.

Pandhare, J.; Zog, K.; Deshpande, V. V. Differential stabilities of alcaline protease inhibitors from actinomycetes: effect of various additives on thermostability. Bioresource technology. Amsterdam, v.84, p.165-169, 2002. Schrijver, A. & Mot, R. Degradation of pesticides by actinomycetes. Critical Reviews in microbiologiy, Boca Raton, v.25, p.85-119, 1999.

Sikora, R.A & Hoffmann-Hergaten, S. Importance of plant health-promoting rhizobacteria for the control of soil-borne fungal diseases and plant parasitic nematodes. Arab. J. Plant Prot. 10:48-53. 1992.

Sikora, R.A. & Padgham, J.L. Biological control potential and modes of action of Bacillus megaterium against Meloidogyne graminicola on rice. Crop Protection 26:971-977.2007.

## Claims

1. A multipurpose biological composition, **characterized by** comprising:
1.0 to 90.0% of at least 2 (two) species from *Bacillus,* or 2 (two) or more strains of the same species and mutants thereof;
1.0 to 90.0 % of at least 2 (two) representatives of fungi from orders Hypocreales, Orbiliales, Helotiales and Mucorales and mutants thereof, or 2 (two) or more strains of the same species from representatives of said orders; Bacillus mixed with fungi from orders Hypocreales, Orbiliales, Helotiales and Mucorales, and combinations among same or part of same (in colony forming units, CFU) together with or separated from agrochemicals (fungicides, insecticides, acaricides, herbicides and nematicides), essential oils of plants or plant extract;
5.0 to 10.0% of agrochemicals;
5.0 to 20.0% of essential oils;
5.0 to 20.0% of plant extracts;
1.0 to 15.0% of additives; and
1.0 to 97.0% of excipients.

2. The multipurpose biological composition according to claim 1, **characterized in that** *Bacillus* from order Bacilales belong to the group consisting of species: *Bacillus velezensis, Bacillus aryabhattai, Bacillus genus, Bacillus pseudomycoides, Bacillus mucilaginosus, Bacillus sonorensis, Bacillus agri, Bacillus aizawai, Bacillus albolactis, Bacillus firmus, Bacillus coagulans, Bacillus endoparasiticus, Bacillus endorhythmos, Bacillus kustaki, Bacillus lacticola, Bacillus lactimorbus, Bacillus lactis, Bacillus laterosporus, Bacillus lentimorbus, Bacillus megaterium, Bacillus medusa, Bacillus metiens, Bacillus natto, Bacillus nigrificans, Bacillus popilliae, pumilus, Bacillus siamensis, Bacillus subtilis, Bacilus licheniformis, Bacilus paralicheniformis, Bacillus amyloliquefasciens, Bacillus megaterium, Bacillus sphaericus, Bacillus thuringiensis,* and any other genus or species from the above cited order.

3. The multipurpose biological composition according to claim 1, **characterized in that** fungi from order Hypocreales belong to the group consisting of species: *Trichoderma amazonicum, Trichoderma asperellum, Trichoderma atroviride, Trichoderma aureoviride, Trichoderma austrokoningii, Trichoderma brevicompactum, Trichoderma cinnamomeum, Trichoderma hamatum, Trichoderma harzianum, Trichoderma koningii, Trichoderma longibrachiatum, Trichoderma polysporum, Trichoderma pseudokoningii, Trichoderma reeset, Trichoderma stromaticum, Trichoderma virens, Trichoderma viride, Trichoderma viridescens, Clonostachys agarwalii, Clonostachys asymmetrica, Clonostachys aurantia, Clonostachys chlorina, Clonostachys compacta, Clonostachys cylindrospora, Clonostachys farinosa, Clonostachys pseudobotrytis, Clonostachys pulvinata, Clonostachys rosea, (Link) Schroers, Clonostachys spectabilis, Clonostachys theobromae, Purpuriocillium lilacinus, Pochonia bulbillosa, Pochonia chlamydosporia, Pochonia chlamydosporia varo catenulata, Pochonia globispora, Pochonia goniodes, Pochonia humicola, Pochonia microbactrospora, Pochonia parasitica, Pochonia rubescens, Pochonia suchlasporia, Metarhizium anisopliae, Metarhizium acridum, Metarhizium brunneum, Metarhizium flavoviride, Metarizium rileyi, Aschersonia cubensi, Aschersonia aleyrodis, Aschersonia australiensis, Aschersonia placenta, Isaria fumosorosea, Lecanicillium lecanni, Lecanicillium longisporum, Lecanicillium muscarium, Lecanicillium fungicola, Cordyceps militaris, Harposporium anguillulae,* and any other genus or species from the above cited order.

4. The multipurpose biological composition according to claim 1, **characterized in that** fungi from order Orbiliales belong to the group consisting of species: *Arthrobotrys oligospora, Arthrobotrys aggregata, Arthrobotrys alaskana, Arthrobotrys amerospora, Arthrobotrys botryospora, Arthrobotrys brochopaga, Arthrobotrys conoides, Arthrobotrys constringens, Arthrobotrys cylindrospora, Arthrobotrys dactyloides, Arthrobotrys elegans, Arthrobotrys ellipsospora, Arthrobotrys entomopaga, Arthrobotrys globospora, Arthrobotrys irregulares, Arthrobotrys javanica, Arthrobotrys longispora, Arthrobotrys musiformis, Arthrobotrys nematopaga, Arthrobotrys oligospora, Dactylaria haptotyla, Dactylaria purpurella, Dactylaria scaphoides, Dactylaria brochopaga, Dactylaria candida,* and any other genus or species from the above cited order.

5. The multipurpose biological composition according to claim 1, **characterized in that** fungi from order Helotiales belong to the group consisting of species: *Monacrosporium Monacrosporium robustum, Monacrosporium appendiculatum, Monacrospium ellipsosporum, Monacrosporium eudermatum, Monacrospium fusiforme, Monacrosporium globosporum, Monacrosporium leptosporum, Monacrosporium cionopagu, Dactylella alba, Dactylella aphrobrocha, Dactylella arcuata, Dactylella arnaudii, Dactylella atractoides, Dactylella attenuata, Dactylella candida, Dactylella cionopaga, Dactylella fusiformis, Dactylella heterospora, Dactylella intermedia, Dactylella oxyspora, Dactylella ramose,* and any other genus or species from the above cited order.

6. The multipurpose biological composition according to claim 1, **characterized in that** fungi from order Mucorales belong to the group consisting of species *Cunninghamella elegans* and any other genus or species from the above cited order.

7. The multipurpose biological composition according to claim 1, **characterized in that** the agrochemicals are comprised of the following active principles:
a) Insecticides - capsaicin, cartap, celastrus-extract, chlorantraniliprole, chlorbenzuron, chlorethoxyfos, chlorfluazuron, chlorpyrifos-e, cnidiadin, cryolite, cyanophos, cyantraniliprole, cyclaniliprole, cyhalothrin, cyhexatin, cypermethrin, dacnusa, DCIP, dichloropropene, dicofol, diglyphus, diglyphus+dacnusa, dimethacarb, dithioether, dodecylacetate, emamectin, encarsia, EPN, eretmocerus, ethylene-dibromide, eucalyptol, fatty acids, fatty acids/salts, fenazaquin, fenobucarb (BPMC), flubrocythrinate, flufenzine, formetanate, formothion, furathiocarb, gamma-cyhalothrin, granulosis virus, NPV, indol-3-ylbutyric acid, iodomethane, isocarbofos, isofenphos, isofenphos-m, isoprocarb, isothioate, kaolin, lindane, liuyangmycin, mephosfolan, metaldehyde, methamidophos, metolcarb (MTMC), mineral oil, m-isothiocyanate, monosultap, oleic acid, omethoate, onus, oxymatrine, paecilomyces, parathion-e, pasteuria, pheromones, phosphorus-acid, photorhabdus, phoxim, phytoseiulus, pirimiphos-e, polyhedrosis virus, potassium oleate, prothiofos, pyraclofos, pyrethrinas, pyridaphenthion, pyrimidifen, pyriproxifen, sulfluramid, tebupirimfos, tefluthrin, temephos, tetradifon, thiofanox, thiometon, triazamate, triflumuron, vertrine, kappa-bifenthrin, kappa-tefluthrin, dichoromezotiaz, broflanilide, pyraziflumid aldicarb, alanycarb, benfuracarb, carbaryl, carbofuran, carbosulfan, methiocarb, methomyl, oxamyl, pirimicarb, propoxur and thiodicarb, acephate, azinphos-ethyl, azinphos-methyl, chlorfenvinphos, chlorpyrifos, chlorpyrifos-methyl, demeton-S-methyl, diazinon, dichlorvos/DDVP, dicrotophos, dimethoate, disulfoton, ethion, fenitrothion, fenthion, isoxathion, malathion, methamidaphos, methidathion, mevinphos, monocrotophos, oxymethoate, oxydemeton-methyl, parathion, parathion-methyl, phenthoate, phorate, phosalone, phosmet, phosphamidon, pirimiphos-methyl, quinalphos, terbufos, tetrachlorvinphos, triazophos, trichlorfon, endosulfan, ethiprole, fipronil, pyrafluprole, pyriprole, acetamiprid, clothianidin, dinotefuran, imidacloprid, nitenpyram, thiacloprid, thiamethoxam, spinosad, spinetoram, mectins, abamectin, emamectin benzoate, ivermectin, lepimectin, milbemectin, hydroprene, kinoprene, methoprene, fenoxycarb, pyriproxyfen; pymetrozine, flonicamid, pyrifluquinazon, clofentezine, hexythiazox, etoxazole, diafenthiuron, fenbutatin oxide, propargite, chlorfenapyr, bensultap, cartap hydrochloride, thiocydam, thiosultap sodium, bistrifluron, diflubenzuron, flufenoxuron, hexaflumuron, lufenuron, novaluron, teflubenzuron, buprofezin, cyromazine, methoxyfenozide, tebufenozide, halofenozide, chromafenozide, amitraz, pyridaben, tebufenpyrad, tolfenpyrad, flufenerim, cyenopyrafen, cyflumetofen, hydramethylnon, acequinocyl, fluacrypyrim, indoxacarb, metaflumizone, spirodiclofen, spiromesifen, spirotetramat, flubendiamide, chlorantraniliprole, cyclaniliprole, cyantraniliprole, azadirachtin, amidoflumet, bifenazate, fluensulfone, piperonyl butoxide, pyridalyl, sulfoxaflor, acrinathrin, allethrin, bifenthrin, cyfluthrin, lambda-cyhalothrin, cypermethrin, alpha-cypermethrin, beta-cypermethrin, zeta-cypermethrin, deltamethrin, esfenvalerate, etofenprox, fenpropathrin, fenvalerate, flucythrinate, tau-fluvalinate, permethrin, silafluofen, and tralomethrin, among others;
b) Fungicides: benzovindiflupyr, antiperonosporic, ametoctradin, amisulbrom, copper hydroxide, copper oxychloride, copper sulfate, copper persulfate, boscalid, thiflumazide, flutianil, furalaxyl, thiabendazole, benodanil, mepronil, isofetamid, fenfuram, bixafen, fluxapyroxad, penflufen, sedaxane, coumoxystrobin, enoxastrobin, flufenoxystrobin, pyraoxystrobin, pyrametostrobin, triclopyricarb, fenaminstrobin, metominostrobin, pyribencarb, meptyldinocap, fentin acetate, fentin chloride, fentin hydroxide, oxytetracycline, chlozolinate, chloroneb, tecnazene, etridiazole, iodocarb, prothiocarb, pyrisoxazole, oxpoconazole, etaconazole, fenpyrazamine, fenpicoxamide, mefentrifluconazole, naftifine, terbinafine, validamycin, pyrimorph, valifenalate, fthalide, probenazole, isotianil, laminarin, teclofthalam, triazoxide, pyriofenone, chlorothalonil, fluoroimide, bitertanol, bromuconazole, cyproconazole, difenoconazole, diniconazole, enilconazole, epoxiconazole, fluquinconazole, fenbuconazole, flusilazole, flutriafol, hexaconazole, imibenconazole, ipconazole, metconazole, myclobutanil, penconazole, propiconazole, prothioconazole, simeconazole, triadimefon, triadimenol, tebuconazole, tetraconazole, triticonazole, prochloraz, pefurazoate, imazalil, triflumizole, cyazofamid, benomyl, carbendazim, thiabendazole, fuberidazole, ethaboxam, etridiazole and hymexazole, azaconazole, diniconazole-M, oxpoconazol, paclobutrazol, uniconazol, 1-(4-chloro-phenyl)-2-([1,2,4]triazol-1-yl)-cycloheptanol, imazalilsulfphate, azoxystrobin, dimoxystrobin, enestroburin, fluoxastrobin, kresoxim-methyl, methominostrobin, orysastrobin, picoxystrobin, pyraclostrobin, trifloxystrobin, enestroburin, methyl (2-chloro-5-[1-(3-methylbenzyloxyimino)ethyl]benzyl)carbamate, methyl (2-chloro-5-[1-(6-methylpyridin-2-ylmethoxyimino)ethyl]benzyl)carbamate, methyl 2-(ortho-(2,5-dimethylphenyloxymethylene)-phenyl)-3-methoxyacrylate, 2-(2-(6-(3-chloro-2-methyl-phenoxy)-5-fluoro-pyrimidin-4-yloxy)-phenyl)-2-methoxyimino-N-methyl-acetamide, 3-methoxy-2-(2-(N-(4-methoxy-phenyl)-cyclopropanecarboximidoylsulfanylmethyl)-phenyl)-acrylic acid methyl ester; carboxin, benalaxyl, benalaxyl-M, fenhexamid, flutolanil, furametpyr, mepronil, metalaxyl, mefenoxam, ofurace, oxadixyl, oxycarboxin, penthiopyrad, isopyrazam, thifluzamide, tiadinil, 3,4-dichloro-N-(2-cyanophenyl)isothiazole-5-carboxamide, dimethomorph, flumorph, flumetover, fluopicolide (picobenzamid), zoxamide, carpropamid, diclocymet, mandipropamid, N-(2-(4-[3-(4-chlorophenyl)prop-2-ynyloxy]-3-methoxyphenyl)ethyl)-2-methanesulfonyl-amino-3-methylbutyramide, N-(2-(4-[3-(4-chloro-phenyl)prop-2-ynyloxy]-3-methoxy-phenyl)ethyl)-2-ethanesulfonylamino-3-methylbutyramide, methyl 3-(4-chlorophenyl)-3-(2-isopropoxycarbonylamino-3-methyl-butyrylamino)propionate, N-(4'-bromobiphenyl-2-yl)-4-difluoromethyl-2-methylthiazole-5-carboxamide, N-(4'-trifluoromethyl-biphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(3',4'-dichloro-4-fluorobiphenyl-2-yl)-3-difluoro-methyl-1-methylpyrazole-4-carboxamide, N-(3',4'-dichloro-5-fluorobiphenyl-2-yl)-3-difluoromethyl-1-methylpyrazole-4-carboxamide, N-(2-cyano-phenyl)-3,4-dichloroisothiazole-5-carboxamide, 2-amino-4-methylthiazole-5-carboxanilide, 2-chloro-N-(1,1,3-trimethyl-indan-4-yl)-nicotinamide, N-(2-(1,3-dimethylbutyl)-phenyl)-1,3-dimethyl-5-fluoro-1H-pyrazole-4-carboxamide, N-(4'-chloro-3',5-difluoro-biphenyl-2-yl)-3-difluoromethyl-1-methyl-1H-pyrazole-4-carboxamide, N-(4'-chloro-3',5-difluoro-biphenyl-2-yl)-3-trifluoromethyl-1-methyl-1H-pyrazole-4-carboxamide, N-(3',4'-dichloro-5-fluoro-biphenyl-2-yl)-3-trifluoromethyl-1-methyl-1H-pyrazole-4-carboxamide, N-(3',5-difluoro-4'-methyl-biphenyl-2-yl)-3-difluoromethyl-1-methyl-1H-pyrazole-4-carboxamide, N-(3',5-difluoro-4'-methyl-biphenyl-2-yl)-3-trifluoromethyl-1-methyl-1H-pyrazole-4-carboxamide, N-(cis-2-bicyclopropyl-2-yl-phenyl)-3-difluoromethyl-1-methyl-1H-pyrazole-4-carboxamide, N-(trans-2-bicyclopropyl-2-yl-phenyl)-3-difluoro-methyl-1-methyl-1H-pyrazole-4-carboxamide, fluopyram, N-(3-ethyl-3,5-5-trimethyl-cyclohexyl)-3-formyl-amino-2-hydroxy-benzamide, oxytetracyclin, silthiofam, N-(6-methoxy-pyridin-3-yl)cyclopropanecarboxamide, 2-iodo-N-phenylbenzamide, N-(2-bicyclo-propyl-2-yl-phenyl)-3-difluormethyl-1-methylpyrazol-4-ylcarboxamide, N-(3',4',5'-trifluorobiphenyl-2-yl)-1,3-dimethylpyrazol-4-ylcarboxamide, N-(3',4',5'-trifluorobiphenyl-2-yl)-1,3-dimethyl-5-fluoropyrazol-4-yl-carboxamide, N-(3',4',5'-trifluorobiphenyl-2-yl)-5-chloro-1,3-dimethyl-pyrazol-4-ylcarboxamide, N-(3',4',5'-trifluorobiphenyl-2-yl)-3-fluoromethyl-Imethylpyrazol-4-ylcarboxamide, N-(3',4',5'- trifluorobiphenyl-2-yl)-3-(chlorofluoromethyl)-1-methylpyrazol-4-ylcarboxamide, N-(3',4',5'-trifluorobiphenyl-2-yl)-3-difluoromethyl-1-methylpyrazol-4-ylcarboxamide, N-(3',4',5'-trifluorobiphenyl-2-yl)-3-difluoromethyl-5-fluoro-1-methylpyrazol-4-ylcarboxamide, N-(3',4',5'-trifluorobiphenyl-2-yl)-5-chloro-3-difluoromethyl-1-methylpyrazol-4-ylcarboxamide, N-(3',4', 5'-trifluorobiphenyl-2-yl)-3-(chlorodifluoromethyl)-lmethylpyrazol-4-ylcarboxamide, N-(3',4',5'-trifluorobiphenyl-2-yl)-1-methyl-3-trifluoromethylpyrazol-4-ylcarboxamide, N-(3',4',5'-trifluorobiphenyl-2-yl)-5-fluoro-1-methyl-3-trifluoro-methylpyrazol-4-ylcarboxamide, N-(3',4',5'-trifluorobiphenyl-2-yl)-5-chloro-1-methyl-3- trifluoromethylpyrazol-4-ylcarboxamide, N-(2',4',5'-trifluorobiphenyl-2-yl)-1,3-dimethylpyrazol-4-ylcarboxamide, N-(2',4',5'-trifluorobiphenyl-2-yl)-1,3-dimethyl-5-fluoropyrazol-4-ylcarboxamide, N-(2',4',5'-trifluorobiphenyl-2-yl)-5-chloro-1,3-dimethylpyrazol-4-ylcarboxamide, N-(2',4',5'-trifluorobiphenyl-2-yl)-3-fluoromethyl-1-methylpyrazol-4-ylcarboxamide, N-(2',4',5'- trifluorobiphenyl-2-yl)-3-(chlorofluoromethyl)-1-methylpyrazol-4-ylcarboxamide, N-(2',4',5'-trifluorobiphenyl-2-yl)-3-difluoromethyl-1-methylpyrazol-4-ylcarboxamide, N-(2',4',5'-trifluorobiphenyl-2-yl)-3-difluoromethyl-5-fluoro-1-methylpyrazol-4-ylcarboxamide, N-(2',4',5'-trifluorobiphenyl-2-yl)-5-chloro-3-difluoromethyl-1-methylpyrazol-4-ylcarboxamide, N-(2',4',5'-trifluorobiphenyl-2-yl)-3-(chlorodifluoromethyl)-1-methylpyrazol-4-ylcarboxamide, N-(2',4',5'- trifluorobiphenyl-2-yl)-1-methyl-3-trifluoromethylpyrazol-4-ylcarboxamide, N-(2',4',5'-trifluorobiphenyl-2-yl)-5-fluoro-1-methyl-3-trifluoromethylpyrazol-4-ylcarboxamide, N-(2',4',5'-trifluorobiphenyl-2-yl)-5-chloro-1-methyl-3-trifluoromethylpyrazol-4-ylcarboxamide, N-(3',4'-dichloro-3-fluorobiphenyl-2-yl)-1-methyl-3-trifluoromethyl-1H-pyrazole-4-carboxamide, N-(3',4'-dichloro-3-fluorobiphenyl-2-yl)-1-methyl-3-difluoromethyl-1H-pyrazole-4-carboxamide, N-(3',4'-difluoro-3-fluorobiphenyl-2-yl)-1-methyl-3-trifluoromethyl-1H-pyrazole-4-carboxamide, N-(3',4'-difluoro-3-fluorobiphenyl-2-yl)-1-methyl-5-difluoromethyl-1H-pyrazole-4-carboxamide, N-(3'-chloro-4'-fluoro-3-fluorobiphenyl-2-yl)-1-methyl-3-difluoromethyl-1H-pyrazole-4-carboxamide, N-(3',4'-dichloro-4-fluorobiphenyl-2-yl)-1-methyl-3-trifluoromethyl-1H-pyrazole-4-carboxamide, N-(3',4'-difluoro-4-fluorobiphenyl-2-yl)-1-methyl-5-trifluoromethyl-1H-pyrazole-4-carboxamide, N-(3',4'-dichloro-4-fluorobiphenyl-2-yl)-1-methyl-3-difluoromethyl-1H-pyrazole-4-carboxamide, N-(3',4'-difluoro-4-fluorobiphenyl-2-yl)-1-methyl-3-difluoromethyl-1H-pyrazole-4-carboxamide, N-(3'-chloro-4'-fluoro-4-fluorobiphenyl-2-yl)-1-methyl-5-difluoromethyl-1H-pyrazole-4-carboxamide, N-(3',4'-dichloro-5-fluorobiphenyl-2-yl)-1-methyl-3-trifluoromethyl-1H-pyrazole-4-carboxamide, N-(3',4'-difluoro-5-fluorobiphenyl-2-yl)-1-methyl-3-trifluoromethyl-1H-pyrazole-4-carboxamide, N-(3',4'-dichloro-5-fluorobiphenyl-2-yl)-1-methyl-5-difluoromethyl-1H-pyrazole-carboxamide, N-(3',4'-difluoro-5-fluorobiphenyl-2-yl)-1-methyl-3-difluoromethyl-1H-pyrazole-4-carboxamide, N-(3',4'-dichloro-5-fluorobiphenyl-2-yl)-1,3-dimethyl-1H-pyrazole-4-carboxamide, N-(3'-chloro-4'-fluoro-5-fluorobiphenyl-2-yl)-1-methyl-3-difluoromethyl-1H-pyrazole-4-carboxamide, N-(4'-fluoro-4-fluorobiphenyl-2-yl)-1-methyl-3-trifluoromethyl-1H-pyrazole-4-carboxamide, N-(4'-fluoro-5-fluorobiphenyl-2-yl)-1-methyl-3-trifluoromethyl-1H-pyrazole-4-carboxamide, N-(4'-chloro-5-fluorobiphenyl-2-yl)-1-methyl-3-trifluoromethyl-1H-pyrazole-4-carboxamide, N-(4'-methyl-5-fluorobiphenyl-2-yl)-1-methyl-3-trifluoromethyl-1H-pyrazole-4-carboxamide, N-(4'-fluoro-5-fluorobiphenyl-2-yl)-1,3-dimethyl-1H-pyrazole-4-carboxamide, N-(4'-chloro-5-fluorobiphenyl-2-yl)-1,3-dimethyl-1H-pyrazole-4-carboxamide, N-(4'-methyl-5-fluorobiphenyl-2-yl)-1,3-dimethyl-1H-pyrazole-4-carboxamide, N-(4'-fluoro-6-fluorobiphenyl-2-yl)-1-methyl-3-trifluoromethyl-1H-pyrazole-4-carboxamide, N-(4'-chloro-6-fluorobiphenyl-2-yl)-1-methyl-3-trifluoromethyl-1H-pyrazole-4-carboxamide, N-[2-(1,1,2,3,3,3-hexafluoropropoxy)-phenyl]-3-difluoromethyl-1-methyl-1H-pyrazole-4-carboxamide, N-[4'-(trifluoromethylthio)-biphenyl-2-yl]-3-difluoromethyl-1-methyl-1H-pyrazole-4-carboxamide, and N-[4'-(trifluoromethylthio)-biphenyl-2-yl]-1-methyl-3-trifluoromethyl-1-methyl-1H-pyrazole-4-carboxamide, fluazinam, pyrifenox, bupirimate, cyprodinil, fenarimol, ferimzone, mepanipyrim, nuarimol, pyrimethanil, triforine, fenpiclonil, fludioxonil, aldimorph, dodemorph, fenpropimorph, tridemorph, fenpropidin, iprodione, procymidone, vinclozolin, famoxadone, fenamidone, octhilinone, probenazole, 5-chloro-7-(4-methyl-piperidin-1-yl)-6-(2,4,6-trifluorophenyl)-[1,2,4]triazolo[1, 5-a]pyrimidine, anilazine, diclomezine, pyroquilon, proquinazid, tricyclazole, 2-butoxy-6-iodo-3-propylchromen-4-one, acibenzolar-5-methyl, captafol, captan, dazomet, folpet, fenoxanil, quinoxyfen, N,N-dimethyl-3-(3-bromo-6-fluoro-2-methylindole-1-sulfonyl)-[1,2,4]triazole-1-sulfonamide, 5-ethyl-6-octyl-[1,2,4]triazolo[1,5-a]pyrimidin-2,7-diamine, 2,3,5,6-tetrachloro-4-methanesulfonyl-pyridine, 3,4,5-trichloropyridine-2,6-di-carbonitrile, N-(1-(5-bromo-3-chloropyridin-2-yl)-ethyl)-2,4-dichloro-nicotinamide, N-((5-bromo-3-chloropyridin-2-yl)-methyl)-2,4-dichloronicotinamide, diflumetorim, nitrapyrin, dodemorphacetate, fluoroimid, blasticidin-S, chinomethionat, debacarb, difenzoquat, difenzoquat-methylsulphat, oxolinic acid, piperalin, mancozeb, maneb, metam, methasulphocarb, metiram, ferbam, propineb, thiram, zineb, ziram, diethofencarb, iprovalicarb, benthiavalicarb, propamocarb, propamocarb hydrochloride, 4-fluorophenyl N-(1-(1-(4-cyanophenyl)-ethanesulfonyl)but-2-yl)carbamate, methyl 3-(4-chlorophenyl)-3-(2-isopropoxycarbonylamino-3-methylbutyrylamino) propanoate, guanidine, iminoctadine, guazatine, kasugamycin, oxytetracyclin, streptomycin, polyoxin, validamycin, binapacryl, dinocap, dinobuton, sulfur-containing heterocyclyl compounds: dithianon, isoprothiolane, edifenphos, iprobenfos, fosetyl, fosetyl-aluminum, pyrazophos, tolclofos-methyl, dichlofluanid, flusulfamide, hexachloro-benzene, phthalide, pencycuron, quintozene, thiophanate, thiophanatemethyl, cyflufenamid, cymoxanil, dimethirimol, ethirimol, furalaxyl, metrafenone and spiroxamine, guazatine-acetate, inunoctadine-triacetate, iminoctadinetris(albesilate), kasugamycin hydrochloride hydrate, dichlorophen, pentachlorophenol and its salts, N-(4-chloro-2-nitro-phenyl)-N-ethyl-4-methyl benzene sulfonamide, dicloran, nitrothal-isopropyl, tecnazen, biphenyl, bronopol, diphenylamine, mildiomycin, oxmcopper, prohexadione calcium, N-(cyclopropylmethoxyimino-(6-difluoromethoxy-2,3-difluoro-phenyl)-methyl)-2-phacetamide, N'-(4-(4-chloro-3-trifluoromethyl-phenoxy)-2,5-dimethylphenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluormethyl-4-(3-trimethylsilanyl-propoxy)-phenyl)-N-ethyl-N-methylformamidine, and N'-(5- difluormethyl-2-methyl-4-(3-trimethylsilanyl-propoxy)-phenyl)-N-ethyl-N-methyl formamidine;
c) Herbicides: alloxydim, clethodim, cloproxydim, cycloxydim, sethoxydim, tralkoxydim, butroxydim, clefoxydim, tepraloxydim; phenoxyphenoxypropionic ester, clodinafoppropargyl, cyhalofop-butyl, diclofop-methyl, fenoxa propethyl, fenoxaprop-P-ethyl, fenthiapropethyl, fluazifop-butyl, fluazifop-P-butyl, haloxyfop-ethoxyethyl, haloxyfop-methyl, haloxyfop-P-methyl, isoxapyrifop, propaquizafop, quizalofop-ethyl, quizalofop-P-ethyl or quizalofop-tefuryl, flamprop-methyl, flamprop-isopropyl, imazapyr, imazaquin, imazamethabenz-methyl (imazame), imazamox, imazapic, imazethapyr, pyrithiobac-acid, pyrithiobac-sodium, bispyribac-sodium, pyribenzoxym, florasulam, flumetsulam, metosulam, amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, halosulfuron-methyl, imazosulfuron, metsulfuron-methyl, nicosulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, tritosulfuron, sulfosulfuron, foramsulfuron, iodosulfuron, benzoyl propethyl, bromobutide, chiorthiamid, diphenamid, etobenzanidibenzchlomet, fluthiamide, fosamin, monalide, clopyralid, picloram, 2,4-D, benazolin, naptalame, diflufenzopyr, benzofenap, clomazone, diflufenican, fluorochloridone, fluridone, pyrazolynate, pyrazoxyfen, isoxaflutole, isoxachlortole, mesotrione, sulcotrione, ketospiradox, flurtamone, norflurazon, amitrol, glyphosate, sulfosate, bilanafos, glufosinateammonium, anilofos, mefenacet, dimethenamid, S-dimethenamid, acetochlor, alachlor, butachlor, butenachlor, diethatyl-ethyl, dimethachlor, metazachlor, metolachlor, S-metolachlor, pretilachlor, propachlor, prynachlor, terbuchlor, thenylchlor, xylachlor, butylate, cycloate, di-allate, dimepiperate, EPTC, esprocarb, molinate, pebulate, pro sulfocarb , thiobencarb, tri-allate, vemolate; benfuresate, perfluidone; asulam, carbetamid, chlorpropham, orbencarb, pronamid, propham, tiocarbazil benefin, butralin, dinitramin, ethalfluralin, fluchloralin, oryzalin, pendimethalin, prodiamine, trifluralin dithiopyr, thiazopyr, butamifos, chlorthal-dimethyl (DCPA), acifluorfen, acifluorfen-sodium, aclonifen, bifenox, chlomitrofen (CNP), ethoxyfen, fluorodifen, fluoroglycof enethyl, fomesafen, furyloxyfen, lactofen, nitrofen, nitrofluorfen or oxyfluorfen, oxadiargyl, oxadiazon, azafenidin, butafenacil, carfentrazone-ethyl, cinidon-ethyl, flumiclorac-pentyl, flumioxazin, flumipropyn, flupropacil, fluthiacet-methyl, sulfentrazone, thidiazimin, nipyraclofen, propanil, pyridate or pyridafol, bromofenoxim, dinoseb, dinoseb-acetate, dinoterb, cyperquat-chloride, difenzoquat-methylsulfate, diquat or paraquatdichloride, chlorbromuron, chlorotoluron, difenoxuron, dimefuron, diuron, ethidimuron, fenuron, fluometuron, isoproturon, isouron, linuron, methabenzthiazuron, methazole, metobenzuron, metoxuron, monolinuron, neburon, siduron, tebuthiuron, bromoxynil, ioxynil, chloridazon, ametryn, atrazine, cyanazine, desmein, dimethamethryn, hexazinone, prometon, prometryn, propazme, simazme, simetryn, terbumeton, terbutryn, terbutylazine, trietazine, metamitron, metribuzin bromacil, lenacil, terbacil, desmedipham, phenmedipham, tridiphane, isoxaben, dichlobenil, dalapon, ethofumesate, chlorfenac, aziprotryn, barban, bensulide, benzthiazuron, benzofluor, buminafos, buthidazole, buturon, cafenstrole, chlorbufam, chlorfenprop-methyl, chloroxuron, cinmethylin, cumyluron, cycluron, cyprazme, cyprazole, dibenzyluron, dipropetryn, dymron, eglinazin-ethyl, endothall, ethiozin, flucabazone, fluorbentranil, flupoxam, isocarbamid, isopropalin, karbutilate, mefluidide, monuron, napropamide, napropanilide, nitralin, oxaciclomefone, phenisopham, piperophos, procyazine, profluralin, pyributicarb, secbumeton, sulfallate (CDEC), terbucarb, triaziflam, triazofenamid, trimeturon, among others;
d) Nematicides: Benomyl, cloethocarb, aldoxycarb, tirpate, diamidafos, fenamiphos, adusafos, dichlofenthion, ethoprophos, fensulfothion, fosthiazate, heterophos, isamidofof, isazofos, phosphocarb, thionazin, imicyafos, mecarphon, acetoprole, benclothiaz, chloropicrin, dazomet, fluensulfone, 1,3-dichloropropene (telone), dimethyl disulfide, metam sodium, metam potassium, methyl bromide, allyl isothiocyanate (AITC), dimethyl sulfate, furfual (aldehyde), among others.

8. The multipurpose biological composition according to claim 1, **characterized by** comprising essential oils and plant extracts obtained from seeds, plants and parts of plants of *Ricinus communis, Crotalaria juncea, Chenopodium ambrosioides, Aradirachia indica, Verbena officinalis, Erythrina mulungu, Quassia amara, Bidens pilosa, Plantago lanceolata, Senecio brasiliensis, Lantana camara, Tagetes patula, Lantana montevidensis, Eucalyptus spp., Lantana montevidensis, Lantana camara, Senecio brasiliensis, Chrysantemum coronarium, Solanum americanum, Solanum paniculatum Hovenia dulcis, Melia azedarach, Butia eriospatha, Schinus terenbithifolius, Cinnamomum camphora, Conyza bonariensis, Senecio brasiliensis, Bidens pilosa, Amaranthus hybridus, Euphorbia heterophylla, Raphanus sativus, Ipomoea purpurea, Brachiaria plantaginea, Ruta graveolens, Aloysio triphylla, Brassica napus, Mucuna pruriens, Ocimum gratissimum, Lippia sidoides, Croton zehntneri, Mentha piperita, Cymbopogon martinii, Cymbopogon schoenanthus, Piper aduncum, Arisaema franchetianum, Zanthoxylum simulans, Ruta chalepensis, Citrus sinensis, Melaleuca quinquenervia, Cymbopogon citratus, Thymus vulgaris, Piper aduncum, Melaleuca alternifolia, Hesperozygis myrtoides,* and other species from the above cited genera.

9. The multipurpose biological composition according to claim 1, **characterized in that** the additives are dispersants selected from the group consisting of water-soluble ionic polymers, amino-acids, algae extracts, naturally occurring compounds, water-soluble anionic polymers, surfactants selected from the group consisting of anionic surfactants and non-ionic surfactants, and combinations and derivatives thereof.

10. The multipurpose biological composition according to claim 1, **characterized in that** the excipients belong to the group consisting of silicas, talc, bentonite, carbohydrates, sugars, starches, carbonates, milk products (whey and powder milk), and combinations and derivatives thereof.

11. The multipurpose biological composition according to claim 1, **characterized in that** it is used as an encapsulated formulation suspension, dispersible concentrate, emulsifiable concentrate, water-in-oil emulsion, oil-in-water emulsion, microemulsion, concentrated suspension, suspo-emulsion, soluble granulate, soluble concentrate, soluble powder, tablet, dispersible granulate, wettable powder, emulsifiable gel, water-soluble gel, emulsifiable granule, emulsifiable powder, oil dispersion or oil concentrated suspension, mixed formulation of soluble concentrate and concentrated suspension, mixed formulation of soluble concentrate and suspo-emulsion, mixed formulation of soluble concentrate and oil-in-water emulsion, oil-concentrated dispersible or miscible suspension, oil-miscible solution, oil-dispersible powder, encapsulated granulate, dry powder, liquid for electrostatic/electrodynamic spray, granulate, spray/spread oil, ultra-low volume suspension, ultra-low volume micro-granulate, thin powder, thin granulate, macrogranulate, encapsulate, microencapsulate and nanoencapsulate.

12. The multipurpose biological composition according to claim 1, **characterized in that** it is used for spraying, boom spraying, aerial spraying, low volume, ultra-low volume, planting furrow spraying, drench, coating (either industrially or not), treatment (either industrially or not) and incrustation (either industrially or not) of crop seeds, not limited to *Coffea spp (Coffea arabica, Coffea canefora, Coffea robusta), Glycine max, Zea mays, Gossypium hirsutum,* greens *(Solanum lycopersicum, Allium cepa, Lactuca sativa, Daucus carota, Capsicum annuum Group),* forest trees *(Eucalyptus spp., Tectona grandis, Hevea brasiliensis, Pinus sp.), Nicotiana tabacum,* ornamental plants, fruit trees *(Citrus spp., Malus spp., Carica papaya, Vitis spp., Cucumis melo, Prunus persica, Passiflora edulis),* Brachiaria spp. *(Brachiaria brizantha, Brachiaria decumbens, Brachiaria humidicola, Brachiaria mutica, Brachiaria ruriziensts, Brachiaria arrecta, Brachiaria dictyneura), Panicum spp. (Panicum maximum), Sorghum spp., Pennisetum americanum,* crotalaria *(Crotalaria juncea, Crotalaria spectabilis, Crotalaria ochroleuca, Crotalaria paulina, Crotalaria breviflora),* and other species from the above cited genera.

13. The multipurpose biological composition according to claim 1, **characterized in that** it is used in the control of phytopathogens, such as: *Phakopsora pachyrhizi, Corynespora cassiicola, Puccinia polysora, Exserohilum turcicum, Xanthomonas spp. (Xanthomonas axonopodis, Xanthomonas Campestis, Xanthomonas vesicatoria), Ramularia areola, Hemileia vastatrix, Cercospora coffeicola, Phoma spp. (Phoma costaricensis), Ascochyta spp. (Ascochyta coffeae), Pseudomonas spp. (Pseudomonas syrtngae, Pseudomonas corrugata), Rhizoctonia solani, Fusarium spp. (Fusarium solani, Fusarium oxysporum, Fusarium graminearum, Fusarium semitectum), Colletotrichum spp. (Colletotrichum gloeosporioides, Colletotrichum truncatum, Colletotrichum lindemuthianum), Macrophomina phaseolina, Sclerotinia sclerotiorum, Botrytis cinerea, Penicillium digitatum,* and other species from the above cited genera.

14. The multipurpose biological composition according to claim 1, **characterized in that** it is used in the control of phytonematodes, such as: *Pratylenchus brachyurus, Pratylenchus zea, Meloidogyne incognita, Meloidogyne javanica, Heterodera glycines, Rotylenchulus reniformis, Pratylenchus coffea, Meloidogyne exigua, Helicotilechus dihystera, Meloidogyne exigua, Meloidogyne paranaensis, Meloidogyne coffeicola, Meloidogyne hapla, Meloidogyne enterolobii, Meloidogyne arabicidae, Meloidogyne arenaria, Pralylenchus brachiurus, Pralylenchus coffea, Pratylenchus zeae, Xiphinema krugi, Heterodera glycines, Helicotylenchus sp., Paratrichodorus sp., Tylenchorhynchus sp., Scutellonema sp., Aphelenchoides spp., Aphelenchus spp., Mesocriconema sp., Tylenchus sp.,* and other species from the above cited genera.

15. The multipurpose biological composition according to claim 1, **characterized in that** it is used in the control of agricultural pests (insects and mites), such as: Polyphagotarsonemus latus, Tetranychus urticae, Diabrotica speciosa, Anticarsia gemmatalis, Spodoptera spp. (Spodoptera cosmioides, Spodoptera frugiperda), Pseudoplusia includens, Trichoplusia ni, Bemisia tabaci, Euschistos heros, Nezara viridula, Leucoptera coffeella, Hypothenemus hampei, Oligonychus ilicis, Polyphagotarsonemus latus, Brevipalpus phoenicis, Planococcus citri, Planococcus minor, Helicoverpa armigera, and other species from the above cited genera.

16. The multipurpose biological composition according to claim 1, **characterized in that** it is used as bioestimulants, inoculants, phosphorus solubilizer and growth stimulant in cultivated plants, such as: *Coffea spp (Coffea arabica, Coffea canefora, Coffea robusta), Glycine max, Zea mays, Gossypium hirsutum,* greens *(Solanum lycopersicum, Allium cepa, Lactuca sativa, Daucus carota, Capsicum annuum Group),* forest trees *(Eucalyptus spp., Tectona grandis, Hevea brasiliensis, Pinus sp.), Nicotiana tabacum,* ornamental plants, fruit trees *(Citrus spp., Malus spp., Carica papaya, Vitis spp., Cucumis melo, Prunus persica, Passiflora edulis),* Brachiaria spp. *(Brachiaria brizantha, Brachiaria decumbens, Brachiaria humidicola, Brachiaria mutica, Brachiaria ruziziensis, Brachiaria arrecta, Brachiaria dictyneura), Panicum spp. (Panicum maximum), Sorghum spp., Pennisetum americanum,* Crotalaria spp. *(Crotalaria juncea, Crotalaria spectabilis, Crotalaria ochroleuca, Crotalaria paulina, Crotalaria breviflora),* and other species from the above cited genera.

17. The multipurpose biological composition according to claim 1, **characterized in that** it is used as soil conditioner for all crops and any cultivatable area.

18. The multipurpose biological composition according to claim 1, **characterized in that** it is used for the purpose of mitigating or reducing the hydric or abiotic stress in cultivated plants, such as: *Coffea spp (Coffea arabica, Coffea canefora, Coffea robusta), Glycine max, Zea mays, Gossypium hirsutum,* greens *(Solanum lycopersicum, Allium cepa, Lactuca sativa, Daucus carota, Capsicum annuum Group),* forest trees *(Eucalyptus spp., Tectona grandis, Hevea brasiliensis, Pinus sp.), Nicotiana tabacum,* ornamental plants, fruit trees *(Citrus spp., Malus spp., Carica papaya, Vitis spp., Cucumis melo, Prunus persica, Passiflora edulis),* Brachiaria spp. *(Brachiaria brizantha, Brachiaria decumbens, Brachiaria humidicola, Brachiaria mutica, Brachiaria ruziziensis, Brachiaria arrecta, Brachiaria dictyneura), Panicum spp. (Panicum maximum), Sorghum spp., Pennisetum americanum,* Crotalaria spp. *(Crotalaria juncea, Crotalaria spectabilis, Crotalaria ochroleuca, Crotalaria paulina, Crotalaria breviflora),* among others.

19. The multipurpose biological composition according to claim 1, **characterized in that** it is used to bioremediate cultivatable and other areas for reducing the environment contamination by toxic residues.
